(19) Europäisches Patentamt / European Patent Office / Office européen des brevets

(11) **EP 2 924 770 B1**

(12) **EUROPEAN PATENT SPECIFICATION**

(45) Date of publication and mention
of the grant of the patent:
**02.05.2018 Bulletin 2018/18**

(21) Application number: **13856910.8**

(22) Date of filing: **19.11.2013**

(51) Int Cl.:
*H01M 10/0525* (2010.01)

(86) International application number:
**PCT/JP2013/081144**

(87) International publication number:
**WO 2014/080893 (30.05.2014 Gazette 2014/22)**

(54) **NEGATIVE ELECTRODE FOR A LITHIUM-ION BATTERY AND ELECTRICAL DEVICE PROVIDED WITH SAME**

NEGATIVELEKTRODE FÜR EINE LITHIUM-ION BATTERIE UND ELEKTRISCHE VORRICHTUNG DAMIT

ÉLECTRODE NÉGATIVE POUR UNE BATTERIE LITHIUM-ION ET DISPOSITIF ÉLECTRIQUE POURVU DE CETTE DERNIÈRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.11.2012 JP 2012256893**

(43) Date of publication of application:
**30.09.2015 Bulletin 2015/40**

(73) Proprietor: **NISSAN MOTOR CO., LTD.
Yokohama-shi, Kanagawa 220-8623 (JP)**

(72) Inventors:
• **WATANABE, Manabu**
**Atsugi-shi**
**Kanagawa 243-0123 (JP)**
• **MIKI, Fumihiro**
**Atsugi-shi**
**Kanagawa 243-0123 (JP)**
• **SANADA, Takashi**
**Atsugi-shi**
**Kanagawa 243-0123 (JP)**
• **CHIBA, Nobutaka**
**Atsugi-shi**
**Kanagawa 243-0123 (JP)**

(74) Representative: **Hoefer & Partner Patentanwälte
mbB
Pilgersheimer Straße 20
81543 München (DE)**

(56) References cited:
| EP-A1- 2 800 176 | WO-A1-2011/065503 |
| WO-A1-2012/161190 | WO-A1-2013/099441 |
| JP-A- 2000 299 108 | JP-A- 2003 331 826 |
| JP-A- 2004 185 984 | JP-A- 2004 349 016 |
| JP-A- 2007 305 424 | JP-A- 2010 135 336 |
| JP-A- 2013 161 785 | US-A1- 2006 040 182 |

**Description**

TECHNICAL FIELD

The present invention relates to a negative electrode for a lithium ion secondary battery and a lithium ion secondary battery using the same. The negative electrode for a lithium ion secondary battery of the present invention and the lithium ion secondary battery using the same are used in a driving power source and an auxiliary power source for motors and the like of vehicles including electric vehicles, fuel-cell vehicles, and hybrid electric vehicles.

BACKGROUND ART

In recent years, it has been increasingly desirable to reduce carbon dioxide in order to address air pollution and global warming. The automobile industry expects to promote electric vehicles (EVs) and hybrid electric vehicles (HEVs) for reducing carbon oxide emissions. Accordingly, electric devices including secondary batteries to drive motors, which have a key to put EVs and HEVs into practical use, are being actively developed.

The secondary batteries for driving motors need to have extremely high output characteristics and high energy compared with consumer lithium ion secondary batteries used in mobile phones or notebook personal computers. Accordingly, lithium ion secondary batteries, which have the highest theoretical energy among all batteries, are attracting attention and are now being developed rapidly.

Generally, a lithium ion secondary battery has a configuration in which a positive electrode and a negative electrode are connected through an electrolyte layer and are accommodated in a battery casing. The positive electrode includes a positive electrode current collector and a positive electrode active material and the like applied to both sides of the positive electrode current collector using a binder. The negative electrode includes a negative electrode current collector and a negative electrode active material and the like applied to the both sides of the negative electrode current collector using a binder.

The negative electrode of conventional lithium ion secondary batteries is made of a carbon/graphite-based material, which is advantageous in charge-discharge cycle life and cost. However, with a carbon/graphite-based material, charge and discharge are performed by storage and release of lithium ions into and from graphite crystals. Accordingly, the thus-configured lithium ion secondary batteries have disadvantage of not providing charge-discharge capacity equal to or more than the theoretical capacity of 37.2 mAh/g obtained from $LiC_6$, which is the maximum lithium introducing compound. It is therefore difficult for such carbon/graphite-based negative electrode materials to implement capacity and energy density that satisfy the level of practical use in vehicle applications.

On the other hand, batteries including negative electrodes made of a material which can be alloyed with Li have higher energy density than that of the conventional batteries employing carbon/graphite-based negative electrode materials. Accordingly, the materials which can be alloyed with Li are expected as the negative electrode materials in vehicle applications. One mole of a Si material, for example, stores and releases 4.4 mole of lithium ions as expressed by Reaction formula (A) below. The theoretical capacity of $Li_{22}Si_5$ ($=Li_{4.4}Si$) is 2100 mAh/g. The initial capacity per Si weight is as much as 3200 mAh/g (see comparative reference example 34 of reference example C).

[Chem. 1]

$$Si + 4.4Li^+ + e^- \leftrightarrow Li_{4.4}Si \ ... \qquad (A)$$

However, in a lithium ion secondary battery whose negative electrodes are made of a material that can be alloyed with Li, the negative electrodes expand and contract during the processes of charge and discharge. The graphite material expands in volume by about 1.2 times when storing Li ions, for example. On the other hand, the Si material significantly changes in volume (by about 4 times) because Si transits from the amorphous phase to the crystalline phase when Si is alloyed with Li. This could shorten the cycle life of electrodes. Moreover, in the case of the Si negative electrode active material, the capacity is a trade-off for the cycle durability. It is therefore difficult to implement high capacity while improving high cycle durability.

To solve the aforementioned problems, a negative electrode active material for a lithium ion secondary battery including an amorphous alloy expressed by $Si_xM_yAl_z$ is proposed (for example, see Patent Literature 1). Herein, x, y, and z in the above formula represent atomic percents and satisfy the following conditions: $x + y + z = 100$; $x \geq 55$; $y < 22$; and $z > 0$. M is a metal composed of at least one of Mn, Mo, Nb, W, Ta, Fe, Cu, Ti, V, Cr, Ni, Co, Zr, and Y. In the invention described in Patent Literature 1, Paragraph [0018] describes that it is possible to implement good cycle life as well as high capacity by minimizing the content of the metal M.

CITATION LIST

PATENT LITERATURE

Patent Literature 1: Japanese Unexamined Patent Application Publication No. 2009-517850

SUMMARY OF INVENTION

TECHNICAL PROBLEM

However, the lithium ion secondary battery whose negative electrodes include an amorphous alloy expressed by the formula $Si_xM_yAl_z$ described in Patent Literature 1 exhibits good cycle characteristics but does not have sufficient initial capacity. The cycle characteristics are also insufficient.
An object of the present invention is to provide a negative electrode for a Li-ion secondary battery which exhibits balanced characteristics of having high initial capacity and retaining high cycle characteristics.

SOLUTION TO PROBLEM

The inventors made various studies to solve the aforementioned problem. The inventors found that the above object could be solved by using negative electrodes employing a negative electrode active material composed of a mixture of a predetermined ternary Si alloy and a carbon material, thus completing the invention.
The present invention is defined in the appended claims and relates to a negative electrode for an electric device which is a lithium ion secondary battery, including: a current collector; and an electrode layer containing a negative electrode active material, an electrically-conductive auxiliary agent and a binder and formed on a surface of the current collector. The negative electrode active material is a mixture of a carbon material and an alloy (hereinafter, just referred to as an alloy or Si alloy) represented by the following formula (1):
[Chem. 2]

$$Si_xTi_yM_zA_a \ldots \qquad .(1)$$

In formula (1), M is Sn. A is inevitable impurity. x, y, z, and a represent mass percent values and satisfy

$$46 \leq x \leq 58, 24 < y \leq 37, 7 \leq z \leq 21$$

$$0 \leq a < 0.5, \text{ and } x + y + z + a = 100,$$

and
wherein the alloy has an average particle diameter smaller than that of the carbon material.

BRIEF DESCRIPTION OF DRAWINGS

[Fig. 1] Fig. 1 is a schematic cross-sectional view schematically illustrating the overview of a laminate-type flat non-bipolar lithium ion secondary battery as a typical embodiment of an electric device according to the present invention.

[Fig. 2] Fig. 2 is a perspective view schematically illustrating an exterior of the laminate-type flat lithium ion secondary battery as a typical embodiment of the electric device according to the present invention.

[Fig. 3] Fig. 3 is a ternary composition diagram showing a plot of alloy components of films formed in reference example A together with a composition range of Si-Ti-Ge alloy constituting a negative electrode active material included in the negative electrode for an electric device not falling under the scope of the present invention.

[Fig. 4] Fig. 4 is a ternary composition diagram showing a preferable composition range of the Si-Ti-Ge alloy constituting the negative electrode active material included in the negative electrode for an electric device not falling under the scope of the present invention.

[Fig. 5] Fig. 5 is a ternary composition diagram showing a more preferable composition range of the Si-Ti-Ge alloy constituting the negative electrode active material included in the negative electrode for an electric device not falling under the scope of the present invention.

[Fig. 6] Fig. 6 is a ternary composition diagram showing a still more preferable composition range of the Si-Ti-Ge alloy constituting the negative electrode active material included in the negative electrode for an electric device not falling under the scope of the present invention.

[Fig. 7] Fig. 7 is a ternary composition diagram showing a still more preferable composition range of a Si-Ti-Ge alloy constituting the negative electrode active material included in the negative electrode for an electric device not falling under the scope of the present invention.

[Fig. 8] Fig. 8 is a ternary composition diagram showing a plot of alloy components of films formed in reference example B together with a composition range of a Si-Ti-Sn alloy constituting the negative electrode active material included in the negative electrode for an electric device not falling under the scope of the present invention.

[Fig. 9] Fig. 9 is a ternary composition diagram showing a preferable composition range of the Si-Ti-Sn alloy constituting the negative electrode active material included in the negative electrode for an electric device not falling under the scope of the present invention.

[Fig. 10] Fig. 10 is a ternary composition diagram showing a more preferable composition range of the Si-Ti-Sn alloy constituting the negative electrode active material included in the negative electrode for an electric device not falling under the scope of the present invention.

[Fig. 11] Fig. 11 is a ternary composition diagram showing a composition range of an Si-Ti-Sn alloy constituting the negative electrode active material included in the negative electrode for an electric device according to the present invention.

[Fig. 12] Fig. 12 is a diagram showing an influence of the alloy composition of the negative electrode active material on initial discharge capacity of each battery obtained in reference examples 19 to 44 and comparative reference examples 14 to 27 in reference example B.

[Fig. 13] Fig. 13 is a diagram showing an influence of the alloy composition of the negative electrode active material on the discharge capacity retention rate at the 50th cycle, of each battery obtained in reference examples 19 to 44 and comparative reference examples 14 to 27 in reference example B.

[Fig. 14] Fig. 14 is a diagram showing an influence of the alloy composition of the negative electrode active material on the discharge capacity retention rate at the 100th cycle, of each battery obtained in reference examples 19 to 44 and comparative reference examples 14 to 27 in reference example B.

[Fig. 15] Fig. 15 is a diagram showing the compositions of Si-Ti-Zn ternary alloys of batteries employing the negative electrodes of reference examples 45 to 56 and comparative reference examples 28 to 40 in reference example C which are plotted with different colors (gray levels) depending on the magnitude of the discharge capacity (mAh/g) at the first cycle.

[Fig. 16] Fig. 16 is a diagram showing the compositions of Si-Ti-Zn ternary alloys of the batteries employing the negative electrodes of reference examples 45 to 56 and comparative reference examples 28 to 40 in reference example C which are plotted with different colors (gray levels) depending on the magnitude of the discharge capacity (mAh/g) at the 50th cycle.

[Fig. 17] Fig. 17 shows the same composition diagram of Si-Ti-Zn ternary alloys as that of Fig. 15 together with a composition range (represented with a different color (a different gray level)) of the Si-Ti-Zn alloy samples of reference examples 45 to 56 and comparative reference examples 28 to 40 in reference example C. In Fig. 17, $0.38 \leq Si$ (wt%/100) < 1.00; 0 < Ti (wt%/100) < 0.62; and 0 < Zn (mass%/100) < 0.62.

[Fig. 18] Fig. 18 shows the same composition diagram of Si-Ti-Zn ternary alloys as that of Fig. 15 together with a preferable composition range (represented with a different color (a different gray level)) in the Si-Ti-Zn alloy samples of reference examples 45 to 56 and comparative reference examples 28 to 40 in reference example C which is represented with a different color (a different gray level). In Fig. 18, $0.38 \leq Si$ (wt%/100) < 1.00; 0 < Ti (wt%/100) $\leq$ 0.42; and 0 < Zn (mass%/100) $\leq$ 0.39.

[Fig. 19] Fig. 19 shows the same composition diagram of Si-Ti-Zn ternary alloys as that of Fig. 16 together with a more preferable composition range (represented with a different color (a different gray level)) in the Si-Ti-Zn alloy samples of reference examples 45 to 56 and comparative reference examples 28 to 40 in reference example C. In Fig. 19, $0.38 \leq Si$ (wt%/100) $\leq$ 0.72; 0.08 < Ti (wt%/100) $\leq$ 0.42; and 0.12 $\leq$ Zn (wt%/100) $\leq$ 0.39.

[Fig. 20] Fig. 20 shows the same composition diagram of Si-Ti-Zn ternary alloys as that of Fig. 16 together with a particularly preferable composition range (represented with a different color (a different gray level)) in the Si-Ti-Zn alloy samples of reference examples 45 to 56 and comparative reference examples 28 to 40 in reference example C. In Fig. 20, $0.38 \leq Si$ (wt%/100) $\leq$ 0.61; 0.19 $\leq$ Ti (wt%/100) $\leq$ 0.42; and 0.12 $\leq$ Zn (wt%/100) $\leq$ 0.35.

[Fig. 21] Fig. 21 shows the same composition diagram of Si-Ti-Zn ternary alloys as that of Fig. 16 together with a most preferable composition range (represented with a different color (a different gray scale)) in the Si-Ti-Zn alloy samples of reference examples 45 to 56 and comparative reference examples 28 to 40 in reference example C. In Fig. 21, $0.47 \leq Si$ (wt%/100) $\leq$ 0.53; 0.19 $\leq$ Ti (wt%/100) $\leq$ 0.21; and 0.26 $\leq$ Zn (wt%/100) $\leq$ 0.35.

[Fig. 22] Fig. 22 is a diagram showing dQ/dV curves of batteries employing samples of pure Si, Si-Ti binary alloys, and Si-Ti-Zn ternary alloys obtained in the discharge process at the first cycle (the initial cycle) in reference example C.

[Fig. 23] Fig. 23 is a diagram showing relationships of the examples between the content rate of Si alloy and the energy density or discharge capacity retention rate.

DESCRIPTION OF EMBODIMENTS

As described above, the present invention is characterized by using a negative electrode employing a negative electrode active material composed of a mixture of a predetermined ternary Si alloy (a ternary Si-Ti-M alloy) and a carbon material.

According to the present invention, the ternary Si-Ti-M alloy is applied. This can provide an action of reducing the amorphous to crystalline phase transition in the alloying process of Si and Li to increase the cycle life. Moreover, the alloy is mixed with a graphite material. This can provide an action of preventing uneven reaction of the Si alloy within the electrode layer (negative electrode active material) with Li ions to increase the cycle durability. By the aforementioned complex actions, it is possible to provide such a useful effect that the negative electrode for an electric device according to the present invention provides high initial capacity and provides high capacity and high cycle durability.

Hereinafter, a description is given of an embodiment of the negative electrode for an electric device of the present invention and an electric device using the same with reference to the drawings. The technical scope of the present invention should be defined based on the description of claims and is not limited to the following embodiment. In the description of the drawings, the same components are given the same reference numerals, and overlapping description is omitted. The dimensional proportions in the drawings are exaggerated for convenience of explanation and are different from actual proportions in some cases. In the present invention, an "electrode layer" refers to a mixture layer containing a negative electrode active material, an electrically-conductive auxiliary agent, and a binder and is also referred to as a negative electrode active material layer in the description of the specification. The electrode layer of each positive electrode is also referred to as a positive electrode active material layer.

Hereinafter, the basic configuration of the electric device to which the negative electrode for an electric device of the present invention is applicable is described using the drawings. The electric device shown in the embodiment by way of example is a lithium ion secondary battery.

First, in a negative electrode for a lithium ion secondary battery according to the present invention and a lithium ion secondary battery employing the same, cells (single cell layers) have high voltage. The lithium ion secondary battery therefore achieves high energy density and high output density. The lithium ion secondary battery including the negative electrode for a lithium ion secondary battery of the embodiment is therefore excellent as a driving power supply or auxiliary power supply for vehicles and can be desirably used as lithium ion secondary batteries for vehicle driving power source and the like. In addition, the lithium ion secondary battery of the embodiment is adequately applicable to lithium ion secondary batteries for mobile devices such as mobile phones.

In other words, the lithium ion secondary battery which is a target of the embodiment only needs to include the negative electrode for a lithium ion secondary battery of the embodiment described below, and the other constituent requirements should not be particularly limited.

When lithium ion secondary batteries are classified by the style and structure, for example, the negative electrode of the embodiment is applicable to every known style and structure of laminate-type (flat) batteries and winding-type (cylindrical) batteries. When the laminate-type (flat) battery structure is employed, long-term reliability is ensured by a sealing technique such as simple thermocompression. The laminated battery structure is advantageous in terms of cost and workability.

Classifying lithium ion secondary batteries by the electric connection manner (electrode structure), the present invention is applicable to both non-bipolar type (inner parallel connection type) batteries and bipolar type (inner serial connection type) batteries.

If lithium ion secondary batteries are classified by the type of electrolyte layers thereof, the negative electrode of the embodiment is applicable to batteries including conventionally-known types of electrolyte layers, such as liquid electrolyte batteries whose electrolyte layers are composed of liquid electrolyte such as non-aqueous electrolyte liquid and polymer batteries whose electrolyte layers are composed of polymer electrolyte. The polymer batteries are further classified into gel electrolyte batteries employing polymer gel electrolyte (also just referred to as gel electrolyte) and solid polymer (all-solid-state) batteries employing polymer solid electrolyte (also just referred to as polymer electrolyte).

In the following description, a non-bipolar (inner parallel connection type) lithium ion secondary battery including the negative electrode for a lithium ion secondary battery of the embodiment is briefly described using the drawings. The technical scope of the lithium ion secondary battery of the embodiment is not limited to the following description.

<Entire Structure of Battery>

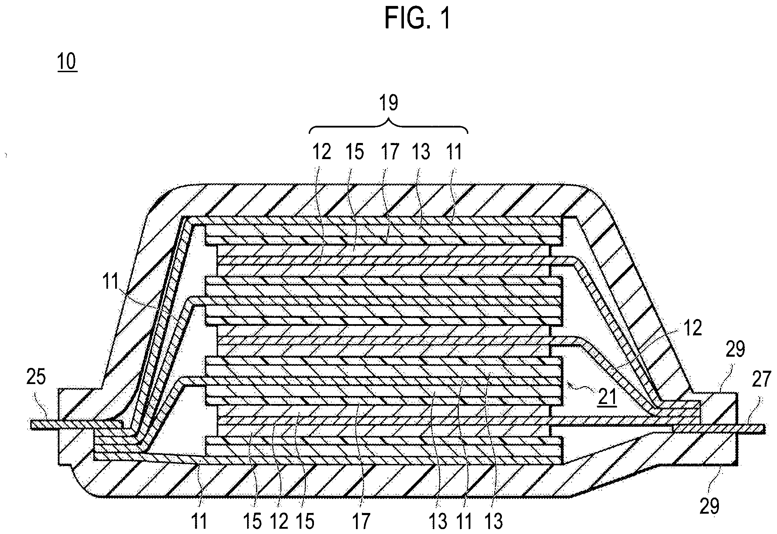

Fig. 1 is a schematic cross-sectional view schematically illustrating the entire structure of a flat (laminate-type) lithium ion secondary battery (hereinafter, also referred to as just a laminated battery) as a typical embodiment of the electric device of the present invention.

As illustrated in Fig. 1, a laminated battery 10 of the embodiment has a structure in which a substantially rectangular power generation element 21, in which charging and discharging reactions actually proceed, is sealed between laminated sheets 29 as a battery exterior member. The power generation element 21 has a configuration in which positive electrodes, electrolyte layers 17, and negative electrodes are stacked on one another. Each positive electrode includes a positive electrode current collector 11 and positive electrode active material layers 13 provided on both surfaces of the current collector 11. Each negative electrode includes a negative electrode current collector 12 and negative electrode active material layers 15 formed on both surfaces of the current collector 12. Specifically, each positive electrode, electrolyte layer, and negative electrode are stacked on one another in this order in such a manner that each of the positive electrode active material layers 13 faces the negative electrode active material layer 15 adjacent thereto with the corresponding electrolyte layer 17 interposed therebetween.

The adjacent positive electrode, electrolyte layer, and negative electrode constitute each single cell layer 19. In other words, the laminated battery 10 illustrated in Fig. 1 has such a configuration that the plural single cell layers 19 are stacked on one another to be electrically connected in parallel. Each of the outermost positive electrode current collectors which are located in the outermost layers of the power generation element 21 is provided with the active material layer 13 on only one side thereof but may be provided with the active material layers on both sides. In other words, the outermost layers may be just composed of current collectors each provided with active material layers on both sides instead of the outermost layer-dedicated current collectors each provided with an active material layer only on one side. The positions of the positive electrodes and negative electrodes in Fig. 1 may be inverted so that the outermost negative electrode current collectors are located in both outermost layers of the power generation element 21 and are each provided with a negative electrode active material layer on one side or on both sides.

The positive electrode current collectors 11 and negative electrode current collectors 12 are respectively attached to a positive electrode current collecting plate 25 and a negative electrode current collecting plate 27, which are electrically connected to respective electrodes (positive and negative electrodes). The current collecting plates 25 and 27 are sandwiched by edges of the laminated films 29 and protrude out of the laminated films 29. The positive and negative electrode current collecting plates 25 and 27 may be attached to the positive and negative electrode current collectors 11 and 12 of the respective electrodes through positive and negative electrode leads (not shown) by ultrasonic welding, resistance welding, or the like if necessary.

The lithium ion secondary battery described above is characterized by the negative electrodes. Hereinafter, the description is given of main constituent members of the battery including the negative electrodes.

<Active Material layer>

The active material layers 13 and 15 include active materials and further include other additives when needed.

[Positive Electrode Active Material Layer]

The positive electrode active material layer 13 includes a positive electrode active material.

(Positive electrode active material)

Examples of the positive electrode active material are lithium-transition metal composite oxides, lithium-transition metal phosphate compounds, lithium-transition metal sulfate compounds, solid solution alloys, ternary alloys, NiMn alloys, NiCo alloys, and spinel Mn alloys.

Examples of the lithium-transition metal composite oxides are $LiMn_2O_4$, $LiCoO_2$, $LiNiO_2$, $Li(Ni, Mn, Co)O_2$, $Li(Li, Ni, Mn, Co)O_2$, $LiFePO_4$, and oxides obtained by replacing a part of the above transition metal with another element.

The solid solution alloys include $xLiMO_2 \cdot (1\text{-}x)Li_2No_3$ ($0 < x < 1$, M is at least one type of transition metals having an average oxidation state of 3+, and N is at least one type of transition metals having an average oxidation state of 4+), $LiRO_2\text{-}LiMn_2O_4$ (R is a transition metal element including Ni, Mn, Co, and Fe), and the like.

The ternary alloys include nickel-cobalt-manganese (composite) positive electrode materials and the like.

The NiMn alloys include $LiNi_{0.5}Mn_{1.5}O_4$ and the like.

The NiCo alloys include $Li(NiCo)O_2$ and the like.

The spinel Mn alloys include $LiMn_2O_4$ and the like.

In some cases, two or more types of positive electrode active materials may be used together. The positive electrode active material is preferably a lithium-transition metal composite oxide from the viewpoint of the capacity and output characteristics. It is certain that positive electrode active materials other than the aforementioned materials can be used. When the optimal particle diameters of active materials to exert the specific effects are different from each other, the different particle diameters optimal to exert the specific effects may be mixed. It is unnecessary to equalize the particle diameters of all the active materials.

The average particle diameter of the positive electrode active materials contained in the positive electrode active material layer 13 is not particularly limited but is preferably 1 to 30 μm and more preferably 5 to 20 μm from the viewpoint of increasing the output. In this specification, the particle diameter refers to the maximum distance between arbitrary two points on the outline of an active material particle (in the observation surface) observed using an observation means, such as a scanning electron microscope (SEM) or a transmission electron microscope (TEM). In the specification, the value of the "average particle diameter" is a value calculated as an average of particle diameters of particles observed in several to several tens fields of view by using an observation means, such as a scanning electron microscope (SEM) or a transmission electron microscope (TEM). The particle diameters and average particle diameters of the other constituent components are defined in a similar manner.

The positive electrode (positive electrode active material layer) can be formed by a normal method of applying (coating with) slurry and can be also formed by any one of kneading, sputtering, vapor deposition, CVD, PVD, ion plating, and thermal spraying.

[Negative Electrode Active Material Layer]

The negative electrode active material layer 15 includes a negative electrode active material.

(Negative electrode active material)

The negative electrode active material is a mixture of a predetermined alloy and a carbon material.

Alloy

In the embodiment according to the present invention, the alloy is expressed by chemical formula (1) below.
[Chem. 3]

$$Si_xTi_yM_zA_a \ ... \qquad (1)$$

In the above formula (1), M is Sn. A is inevitable impurity. x, y, z, and a represent mass percent values. Herein, $46 \leq x \leq 58$, $24 < y \leq 37$, $7 \leq z \leq 21$ and $0 \leq a < 0.5$, and $x + y + z + a = 100$, wherein the alloy has an average particle diameter smaller than that of the carbon material. In the specification, the inevitable impurities refer to substances which exist in raw materials of the Si alloy or substances unavoidably mixed into the Si alloy in the manufacturing process. The inevitable impurities are unnecessary under normal conditions but are allowable because the content thereof is not high enough to influence on the characteristics of the Si alloy.

In the embodiment, Ti as a first additive element and M (Sn) as a second additive element are selected as the negative electrode active material, so that the amorphous to crystalline phase transition can be reduced in the Li alloying process. This can increase the cycle life. The negative electrode active material of the embodiment implements higher capacity than conventional negative electrode active materials, for example, carbon-based negative electrode active materials.

The amorphous to crystalline phase transition in the Li alloying process is inhibited for the following reason. When Si of the Si material is alloyed with Li, the Si material transits from the amorphous to crystalline phases and significantly changes in volume (by about four times), and the particles thereof are broken. The Si material therefore loses the function as the active material. Accordingly, the amorphous to crystalline phase transition is inhibited to prevent collapse of the particles themselves and thereby allow the Si material to retain the function as the active material (high capacity), thus increasing the cycle life. By selecting the first and second additive elements as described above, it is possible to provide Si alloy negative electrode active materials that can implement high capacity and high cycle durability.

As described above, M is Sn, wherein embodiments where M is at least one metal selected from the group consisting of Ge, Zn, and combinations thereof do not fall under the scope of the present invention but are described for improving the understanding of the present invention. Hereinafter, Si alloys including $Si_xTi_yGe_zA_a$, $Si_xTi_ySn_zA_a$, and $Si_xTi_yZn_zA_a$ are described.

$$Si_xTi_yGe_zA_a$$

By including Ti as the first additive element and Ge as the second additive element as described above, $Si_xTi_yGe_zA_a$ above can inhibit the amorphous to crystalline phase transition in the Li alloying process and increase the cycle life. Accordingly, the negative electrode active material including $Si_xTi_yGe_zA_a$ provides higher capacity than that of conventional negative electrode active materials, for example, carbon-based negative electrode active materials.

In the composition of the aforementioned alloy, preferably, x is not less than 17 and less than 90; y is more than 10 and less than 83; and z is more than 0 and less than 73. When x is not less than 17, the alloy can provide high initial discharge capacity. When y is more than 10, the above alloy can implement good cycle life.

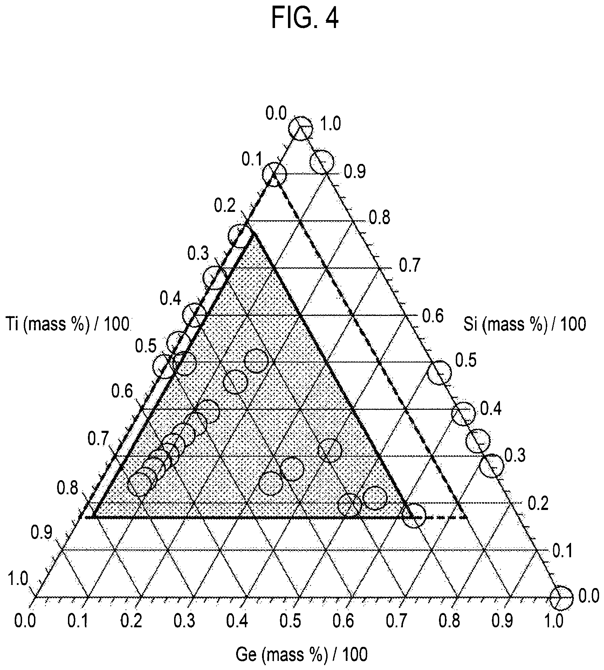

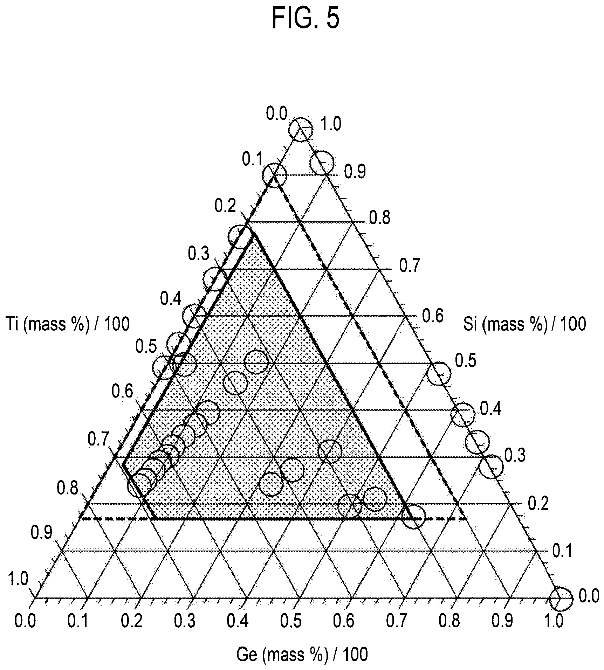

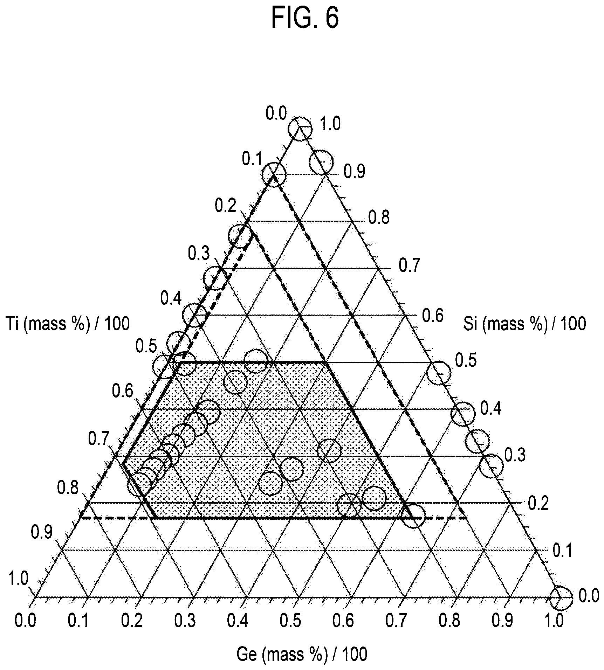

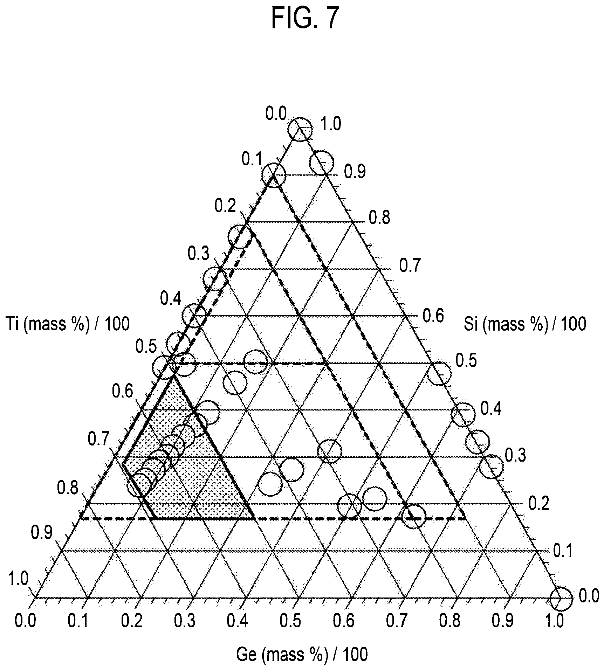

From the viewpoint of further improving the aforementioned characteristics of the negative electrode active material, it is preferable that x is in a range of 17 to 77, y is in a range of 20 to 80, and z is in a range of 3 to 63 as represented by the shaded region in Fig. 4. More preferably, y is not more than 68 as represented by the shaded region in Fig. 5. Still more preferably, x is not more than 50 as represented by the shaded region in Fig. 6. Most preferably, y is not less than 51% as represented by the shaded region in Fig. 7.

As described above, A is impurities other than the above-described three components which are derived from the raw materials or process (inevitable impurity). a is $0 \leq a < 0.5$, and preferably, $0 \leq a < 0.1$.

$$Si_xTi_ySn_zA_a$$

By including Ti as the first additive element and Sn as the second additive element as described above, $Si_xTi_ySn_zA_a$ above can inhibit the amorphous to crystalline phase transition in the Li alloying process and increase the cycle life. Accordingly, the negative electrode active material employing $Si_xTi_ySn_zA_a$ provides higher capacity than that of conventional negative electrode active materials, for example, carbon-based negative electrode active materials.

In the composition of the aforementioned alloy, x, y, and z satisfy mathematical formula:

[Math. 1]

$$46 \leq x \leq 58, \ 24 < y \leq 37, \ 7 \leq z \leq 21$$

When the content of each component is in the aforementioned range, the alloy can provide an initial discharge capacity of more than 1000 mAh/g and also can provide a cycle life of more than 90% (after 50 cycles).

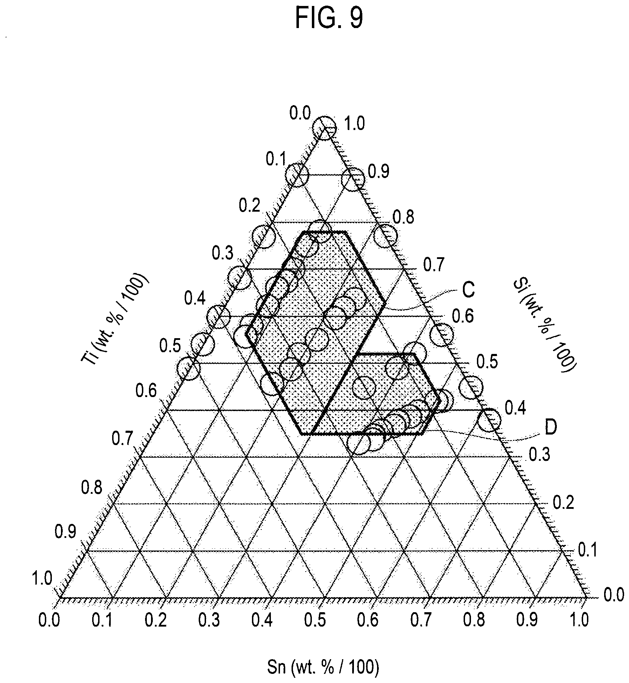

From the viewpoint of further improving the aforementioned characteristics of a negative electrode active material not falling under the scope of the present invention, it is preferable that the content of titanium is not less than 7 mass%. As indicated by reference symbol C of Fig. 9, a first region is preferably a range including a silicon (Si) content of not less than 35 mass% and not more than 78 mass%, a tin (Sn) content of not less than 7 mass% and not more than 30 mass%, and a titanium (Ti) content of not less than 7 mass% and not more than 37 mass%. As indicated by reference symbol D of Fig. 9, a second region is preferably a range including a Si content of not less than 35 mass% and not more than 52 mass%, a Sn content of not less than 30 mass% and not more than 51 mass%, and a Ti content of not less than 7 mass% and not more than 35 mass%. In other words, it is preferable that x, y, and z satisfy mathematical formula (3) or (4) below:

[Math. 2]

$$35 \leq x \leq 78,\ 7 \leq y \leq 37,\ 7 \leq z \leq 30 \quad …(3)$$

$$35 \leq x \leq 52,\ 7 \leq y \leq 35,\ 30 \leq z \leq 51 \quad …(4)$$

The discharge capacity retention rate can be 45% or higher after 50 cycles as shown by referential examples described later.

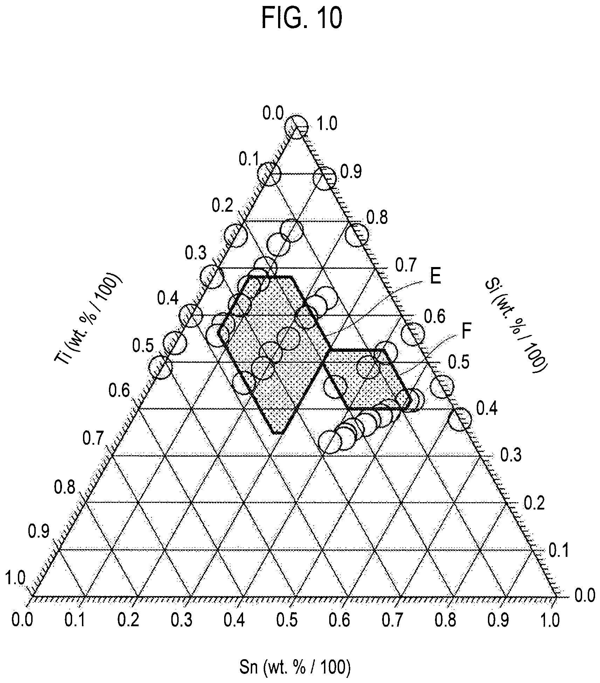

From the viewpoint of ensuring better cycle characteristics, as indicated by reference symbol E in Fig. 10, a first region is preferably a range including a Si content of not less than 35 mass% and not more than 68 mass%, a Sn content of not less than 7 mass% and not more than 30 mass%, and a Ti content of not less than 18 mass% and not more than 37 mass%. As indicated by reference symbol F in Fig. 10, a second region is preferably a range including a Si content of not less than 39 mass% and not more than 52 mass%, a Sn content of not less than 30 mass% and not more than 51 mass%, and a Ti content of not less than 7 mass% and not more than 20 mass%. In other words, it is preferable that x, y, and z satisfy mathematical formula (5) or (6) below:

[Math. 3]

$$35 \leq x \leq 68,\ 18 \leq y \leq 37,\ 7 \leq z \leq 30 \quad …(5)$$

$$39 \leq x \leq 52,\ 7 \leq y \leq 20,\ 30 \leq z \leq 51 \quad …(6)$$

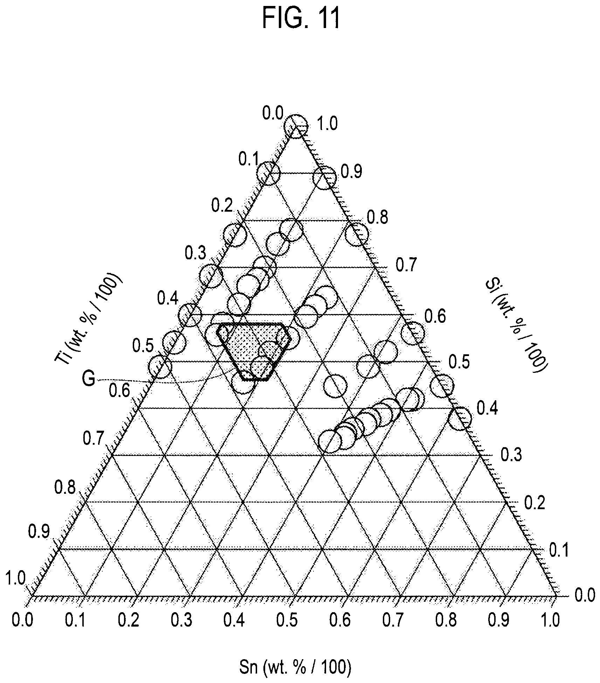

From the viewpoint of the initial discharge capacity and cycle characteristics, the negative electrode active material of the embodiment according to the present invention includes an alloy in which the contents of the components are in the range indicated by reference symbol G in Fig. 11 and the rest is composed of inevitable impurity. The region indicated by reference symbol G is a region including a Si content of not less than 46 mass% and not more than 58 mass%, a Sn content of not less than 7 mass% and not more than 21 mass%, and a Ti content of not less than 24 mass% and not more than 37 mass%. In other words, it is preferable that x, y, and z satisfy mathematical formula (7) below:

[Math. 4]

$$46 \leq x \leq 58,\ 24 \leq y \leq 37,\ 7 \leq z \leq 21 \quad …(7)$$

a is $0 \leq a < 0.5$, and preferably, $0 \leq a < 0.1$.

$$Si_x Ti_y Zn_z A_a$$

By including Ti as the first additive element and Zn as the second additive element as described above, $Si_x Ti_y Zn_z A_a$ above can inhibit the amorphous to crystalline phase transition in the Li alloying process and therefore increase the cycle life. Accordingly, the negative electrode active material employing $Si_x Ti_y Zn_z A_a$ provides higher capacity than that of conventional negative electrode active materials, for example, carbon-based negative electrode active materials.

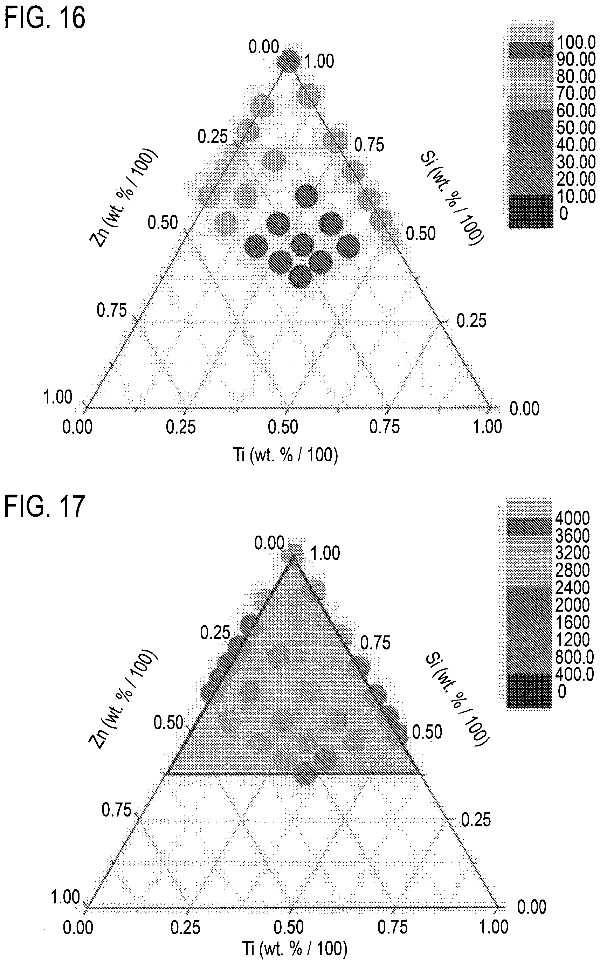

x, y, and z preferably satisfy mathematical formula (8) below (see Fig. 17):

[Math. 5]

$$38 \leq x < 100,\ 0 < y < 62,\ 0 < z < 62 \quad …(8)$$

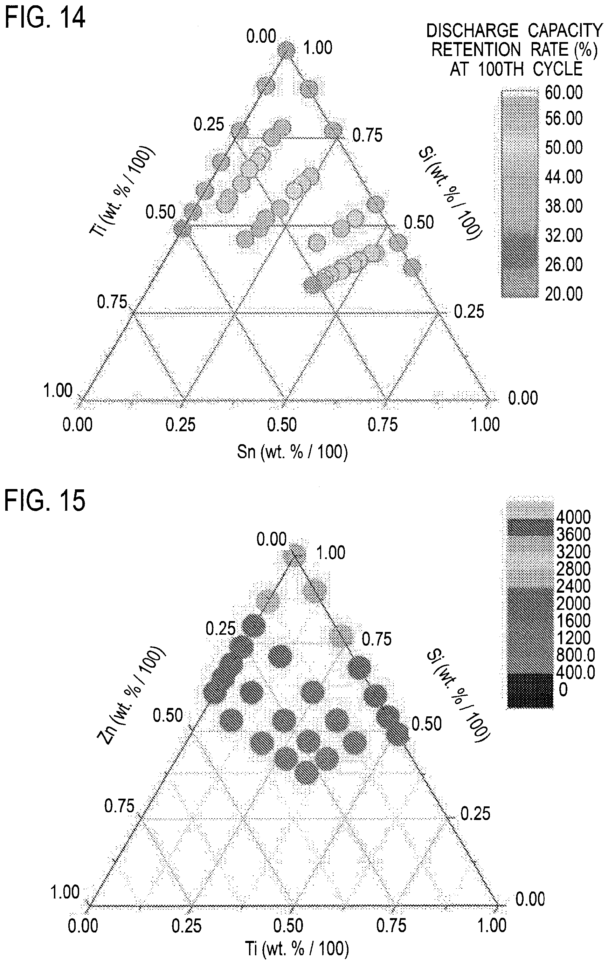

To be specific, when the Si-Ti-Zn alloy has a composition ratio within a range surrounded by the thick solid line in Fig. 17 (within the triangle), the negative electrode active material including the Si-Ti-Zn alloy can implement extremely high capacity that is impossible for existing carbon negative electrode active materials to implement. Similarly, the negative electrode carbon material including the Si-Ti-Zn alloy can implement high capacity (an initial capacity of 690 mAh/g or more) equal to or higher than that of existing Sn alloy negative electrode active materials. Also in terms of cycle durability, which is a trade-off for high capacity, the negative electrode carbon material including the Si-Ti-Zn alloy can implement extremely excellent cycle durability (a high discharge capacity retention rate of not less than 87% at the 50th cycle in particular) compared with Sn-based negative electrode active materials, which have high capacity but poor cycle durability, and the multi-component alloy negative electrode active materials according to Patent Literature 1 (see Table 3 and Figs. 15 to 17).

More preferably, x, y, and z satisfy mathematical formula (9) below:
[Math. 6]

$$38 \leq x < 100, \ 0 < y \leq 42, \ 0 < z \leq 39 \quad \ldots(9)$$

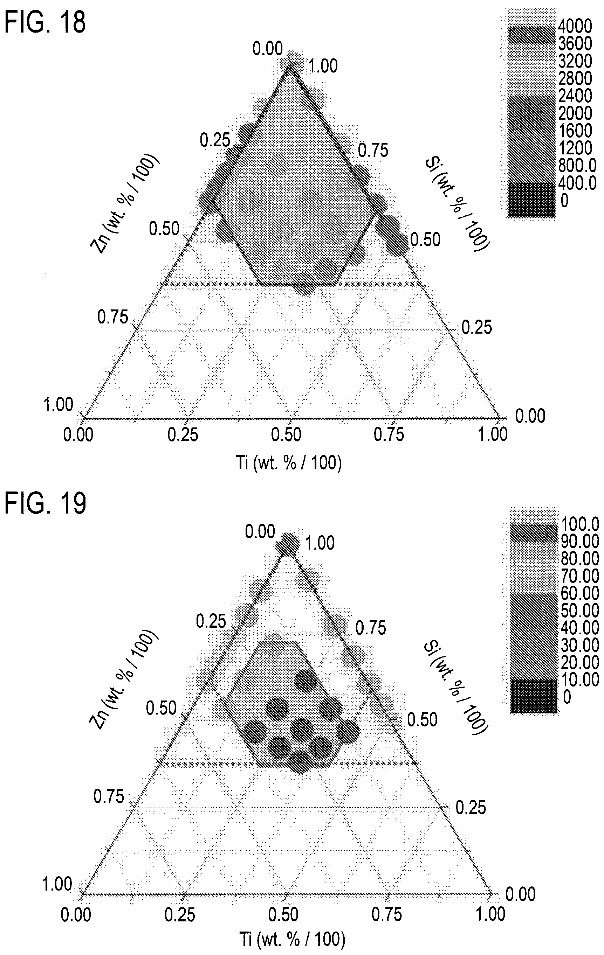

Herein, when the composition ratio of Ti as the first additive element, Zn as the second additive element, and high capacity element Si is in a proper range defined in the above description, the Si-alloy negative electrode active material has good characteristics. To be specific, when the composition ratio of the Si-Ti-Zn alloy is within the range surrounded by the thick solid line in Fig. 18 (within the pentagon in Fig. 18 = within a shape obtained by removing the two corners at the bottom of the triangle in Fig. 17), the Si alloy negative electrode active material can also implement extremely high capacity that is impossible for existing carbon negative electrode active materials to implement. Moreover, the Si alloy negative electrode active material also can implement a high capacity (an initial capacity of 690 mAh/g or higher) equal to or higher than that of existing Sn alloy negative electrode active materials. In this case, particularly, the aforementioned composition range is a range of compositions which can specifically implement high capacities in reference examples 45 to 56 of reference example C (= the pentagon surrounded by the thick solid line in Fig. 18). Also in terms of the cycle durability, which is a trade-off for high capacity, the Si-alloy negative electrode active material can implement extremely excellent cycle durability compared with Sn-based negative electrode active materials, which have high capacity but poor cycle durability, and the multi-component alloy negative electrode active materials according to Patent Literature 1. To be specific, the Si-alloy negative electrode active material implements a high discharge capacity retention rate of 87% or more at the 50th cycle. It is therefore possible to provide excellent Si-alloy negative electrode active materials (see Table 3 and Figs. 15, 16, and 18).

Still more preferably, x, y, and z satisfy mathematical formula (10) below:
[Math. 7]

$$38 \leq x \leq 72, \ 8 \leq y \leq 42, \ 12 \leq z \leq 39 \quad \ldots(10)$$

When the composition ratio of Ti as the first additive element, Zn as the second additive element, and high capacity element Si is in a proper range defined in the above description, the provided Si-alloy negative electrode active materials have better characteristics. To be specific, the Si alloy negative electrode active materials can implement significantly high capacity that is impossible for existing carbon negative electrode active material to implement also when the composition ratio of the Si-Ti-Zn ratio is within the range surrounded by the thick solid line in Fig. 19 (within a polygon). Moreover, the Si alloy negative electrode active material can also implement high capacity (the initial capacity is 690 mAh/g or higher) equal to or higher than that of existing Sn alloy negative electrode active materials. Also in terms of the cycle durability, which is a trade-off for high capacity, the Si-alloy negative electrode active material can implement extremely excellent cycle durability compared with Sn-based negative electrode active materials, which provide high capacity but poor cycle durability, and the multi-component alloy negative electrode active materials according to Patent Literature 1. To be specific, the Si-alloy negative electrode active materials implement a high discharge capacity retention rate of 87% or more at the 50th cycle. In this case, particularly, the above-described still more preferable composition range is a range of compositions which can specifically implement good-balanced high capacity and high cycle durability in reference examples 45 to 56 of reference example C (= the polygon surrounded by the thick solid line in Fig. 19). This can provide more excellent Si-alloy negative electrode active materials (see Table 3 and Figs. 15, 16, and 19).

Particularly preferably, x, y, and z satisfy mathematical formula (11) below:
[Math. 8]

$$38 \leq x \leq 61, \ 19 \leq y \leq 42, \ 12 \leq z \leq 35 \quad \ldots(11)$$

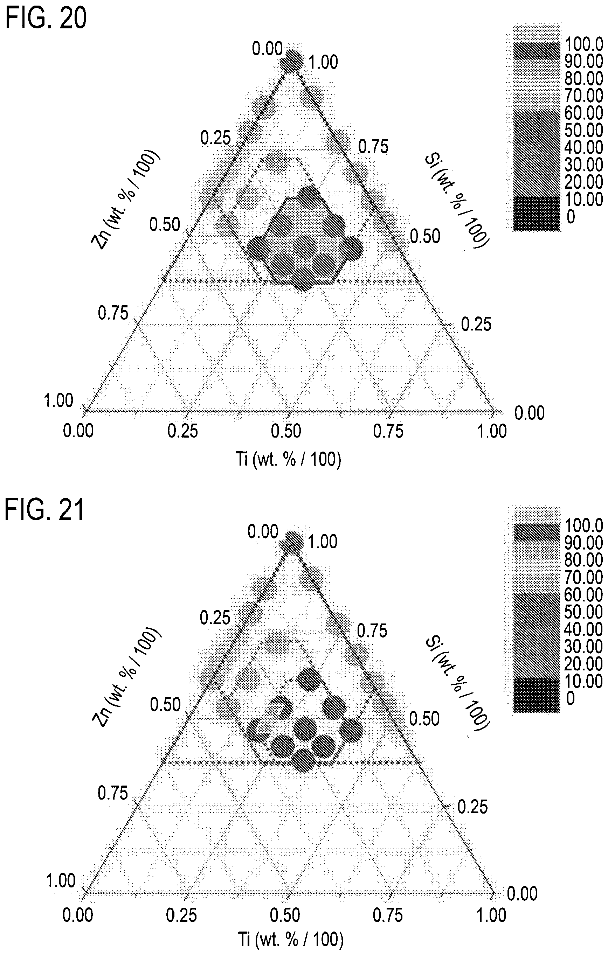

When the composition ratio of Ti as the first additive element, Zn as the second additive element, and high capacity element Si is in a proper range defined in the above description, the Si-alloy negative electrode active materials have particularly good characteristics. To be specific, the Si alloy negative electrode active materials can implement extremely high capacity that is impossible for existing carbon negative electrode active materials to implement also when the composition ratio of the Si-Ti-Zn alloy is within the range surrounded by the thick solid line in Fig. 20 (within the small polygon). Moreover, the Si alloy negative electrode active materials also can implement high capacity (an initial capacity of 690 mAh/g or more) equal to or higher than that of existing Sn alloy negative electrode active materials. Also in terms of the cycle durability, which is a trade-off for high capacity, the Si-alloy negative electrode active materials can implement extremely excellent cycle durability compared with Sn-based negative electrode active materials, which have high capacity but poor cycle durability, and the multi-component alloy negative electrode active materials according to Patent Literature 1. To be specific, the Si-alloy negative electrode active materials provide a high discharge capacity retention rate of 90% or more at the 50th cycle. In this case, the particularly preferable range is a range of compositions which can specifically implement high capacity and higher cycle durability in a very good balanced manner in reference examples 45 to 56 of reference example C (= the small polygon surrounded by the thick solid line in Fig. 20). This can provide Si-alloy negative electrode active materials of high performance (see Table 3 and Figs. 15, 16, and 20).

Most preferably, x, y, and z satisfy mathematical formula (12) below:
[Math. 9]

$$47 \leq x \leq 53, \ 19 \leq y \leq 21, \ 26 \leq z \leq 35 \quad \ldots(12)$$

Herein, the Si-alloy negative electrode active material has the best characteristics when the composition ratio of Ti as the first additive element, Zn as the second additive element, and high capacity element Si is within the proper range defined in the above description. To be specific, the Si alloy negative electrode active materials can implement extremely high capacity that is impossible for existing carbon negative electrode active materials to implement also when the composition ratio of the Si-Ti-Zn alloy is within the range surrounded by the thick solid line in Fig. 21 (within the small rectangle). Moreover, the Si alloy negative electrode active materials also can implement high capacity (an initial capacity of 1129 mAh/g or higher) higher than that of existing Sn alloy negative electrode active materials. Also in terms of the cycle durability, which is a trade-off for high capacity, the Si-alloy negative electrode active materials can implement extremely excellent cycle durability compared with Sn-based negative electrode active materials, which provide high capacity but poor cycle durability, and the multi-component alloy negative electrode active materials according to Patent Literature 1. To be specific, the Si-alloy negative electrode active materials can implement a higher discharge capacity retention rate of 96% or more at the 50th cycle. In this case, the aforementioned most preferable range is configured to include only a range of compositions which can specifically achieve the best balance (the best mode) of higher capacity and higher cycle durability in reference examples 45 to 56 of reference example C (= the small rectangle surrounded by the thick solid line in Fig. 21). This can provide Si-alloy negative electrode active materials of extremely high performance (see Table 3 and Figs. 15, 16, and 21).

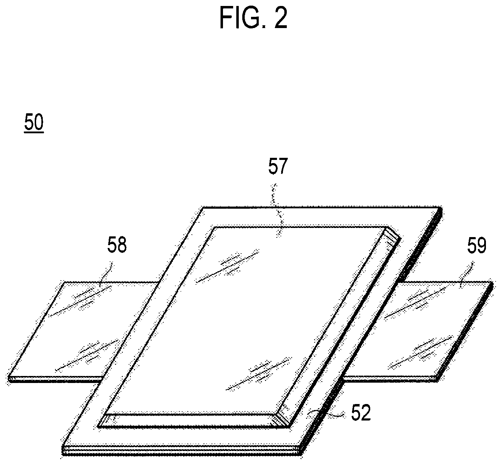

To be specific, the negative electrode active material not falling under the scope of the present invention is a ternary amorphous alloy expressed by $Si_xTi_yZn_z(A_a)$ having the aforementioned proper composition ratio just after manufactured (not yet charged). In the lithium ion secondary battery employing the negative electrode active material, the negative electrode active material has remarkable characteristics of being capable of inhibiting the large volume change due to the amorphous to crystalline phase transition in the Si-Li alloying process when the battery is charged/discharged. With binary alloys not including any one of the metal elements added to Si in the ternary alloys expressed by $Si_xTi_yZn_z$ (Si-Zn alloy (y=0), Si-Ti alloy (z=0)), it is difficult to maintain high cycle durability (particularly, high discharge capacity retention rate at the 50th cycle), causing a significant problem that the cycle characteristics are rapidly lowered (degraded) (see the comparison between reference examples 45 to 56 of reference example C with comparative reference examples 28 to 40). With other ternary alloys and quaternary alloys expressed by the $Si_xM_yAl_z$ of Patent Literature 1, it is difficult to maintain high cycle durability, (particularly, high discharge capacity retention rate at the 50th cycle), thus causing a significant problem that the cycle characteristics is rapidly lowered (degraded). To be specific, with the ternary and quaternary alloys of Patent Literature 1, the initial capacity (the discharge capacity at the first cycle) is extremely higher than that of existing carbon-based negative electrode active materials (the theoretical capacity: 372 mAh/g) and is also higher than that of Sn-based negative electrode active materials (the theoretical capacity: about 600 to 700 mAh/g). However, the cycle characteristics thereof are very poor and insufficient compared with the discharge capacity retention rate (about 60%) at the 50th cycle of Sn-based negative electrode active materials that can implement a high capacity of 600 to 700 mAh/g. The ternary and quaternary alloys of Patent Literature 1 therefore show an imbalance between high capacity and cycle durability, which are in a trade-off, and cannot be put into practical use. To be specific, the quaternary alloy of $Si_{62}Al_{18}Fe_{16}Zr_4$ of Example 1 of Patent Literature 1 has a high initial capacity of about 1150 mAh/g as shown in Fig. 2, but the circulation capacity thereof is already lowered to about 1090 mAh/g within only five or six cycles. In Example 1 of Patent Literature 1, the discharge capacity retention rates are significantly lowered to about 95% already at the fifth or sixth cycles. Fig. 2 shows that the discharge capacity retention rate is reduced substantially by 1% per one cycle. Accordingly, the discharge capacity retention rate is estimated to be reduced by substantially 50% (= the discharge capacity retention rate is reduced to substantially 50%). Similarly, the ternary alloy of $Si_{55}Al_{29.3}Fe_{15.7}$ of Example 2 provides a high initial capacity of about 1430 mAh/g as shown in Fig. 4, but the circulation capacity thereof is already significantly lowered to about 1300 mAh/g within only five or six cycles. In Example 2 of Patent Literature 1, the discharge capacity retention rate is significantly lowered to about 90% at the fifth or sixth cycle. Fig. 2 shows that the discharge capacity retention rate is reduced by substantially 2% per one cycle. Accordingly, the discharge capacity retention rate is estimated to be reduced by substantially 100% (= the discharge capacity retention rate is reduced to substantially 0%). As for the quaternary alloys of $Si_{60}Al_{20}Fe_{12}Ti_8$ of Example 3 and $Si_{62}Al_{16}Fe_{14}Ti_8$, there is no description about the initial capacity, but Table 2 shows that the circulation capacity is already reduced to low values of about 700 to 1200 mAh/g within only five or six cycles. The discharge capacity retention rates at the fifth and sixth cycle of Example 3 of Patent Literature 1 are equal to or lower than those of Examples 1 and 2, and the discharge capacity retention rate is estimated to be reduced by substantially 50% to 100% at the 50th cycle (= the discharge capacity retention rate is reduced to substantially 50% to 0%). The alloy composition is described by atom ratio in Patent Literature 1. If the alloy composition is shown in mass ratio in a similar manner to the embodiment, the Fe content is about 20 mass% in Examples. This means that Patent Literature 1 discloses the compositions of alloys with Fe contained as the first additive element.

Accordingly, the batteries employing the aforementioned binary alloys or ternary or quaternary alloys according to Patent Literature 1 do not have enough cycle characteristics to satisfy the practical use level in fields strongly requiring cycle durability like vehicle applications. Such batteries have problems in reliability and safety and are difficult to put into practical use. On the other hand, the negative electrode active materials including the ternary alloy expressed by $Si_xTi_yZn_z(A_a)$ can implement high discharge capacity retention rates at the 50th cycle (see Fig. 16) as the high cycle characteristics. Moreover, the initial capacity (the discharge capacity at the first cycle) thereof is extremely higher than that of existing carbon-based negative electrode active materials (see Fig. 15) and is also equal to or higher than existing Sn-based negative electrode active materials (see Fig. 15). The negative electrode active material provided herein has good-balanced characteristics. In other words, the inventors found negative electrode active materials employing the alloys which can implement both characteristics of high capacity and cycle durability in a balanced manner, which are in a trade-off and cannot be implemented by existing carbon and Sn-based negative electrode active materials or ternary and quaternary negative electrode active materials according to Patent Literature 1. To be specific, it is found that the predetermined object can be achieved by selecting two kinds of metal of Ti and Zn from the group consisting of one or two or more additive elements which can be variously combined. Accordingly, the embodiment not falling under the scope of the present invention is excellent in providing a lithium ion secondary battery with high capacity and high cycle durability.

Hereinafter, the negative electrode active material $Si_xTi_yZn_zA_a$ is described in detail.

(1) Total Mass Fraction of Alloy

$x + y + z + a = 100$ in formula (1), which is the total mass fraction of the alloy having the aforementioned composition formula $Si_xTi_yZn_zA_a$ (herein, x, y, z, and a represent mass percent values). The negative electrode active material therefore needs to be a ternary alloy of Si-Ti-Zn. In other words, the negative electrode active material does not include any binary alloy, any ternary alloy of another composition, or any quaternary or higher alloy with other metals added. However, the negative electrode active material may include the inevitable impurity A described above. The negative electrode active material layer 15 only needs to include at least an alloy expressed by the composition formula of $Si_xTi_yZn_zA_a$ and may include two or more types of alloys which are expressed by the composition formula of $Si_xTi_yZn_zA_a$ and have different compositions.

(2) Si Mass Fraction in Alloy

The range of x in formula (2), which is the mass fraction of Si in the alloy expressed by the above composition formula of $Si_xTi_yZn_zA_a$, is preferably $38 \leq x < 100$, more preferably $38 \leq x \leq 72$, still more preferably $38 \leq x \leq 61$, and particularly preferably $47 \leq x \leq 53$ (see Table 3 and Figs. 17 to 21). This is for the following reason. The higher the mass fraction (x) of high capacity element Si in the alloy, the higher the capacity. When x is in the range of $38 \leq x < 100$, such alloy can implement extremely high capacity (690 mAh/g or more) that is impossible for existing carbon negative electrode active materials to implement. The alloy can also implement high capacity equal to or higher than that of existing Sn-based negative electrode active materials (see Figs. 17 and 18). Moreover, when x is in the range of $38 \leq x < 100$, the alloy provides an excellent discharge capacity retention rate at the 50th cycle (cycle durability) (see Table 3 and Figs. 16 to 18). On the other hand, with binary alloys (Si-Zn alloys (y=0) and Si-Ti alloys (z=0)) not including any one of the metal additive elements (Ti or Zn) added to high capacity element Si compared with the ternary alloys expressed by the composition formula of $Si_xTi_yZn_z$, the high cycle durability cannot be maintained adequately, and the high discharge capacity retention rate at the 50th cycle in particular cannot be maintained adequately (see reference examples 28 to 36 of Table 3 and Fig. 16), thus causing a large problem that the cycle characteristics are rapidly lowered (degraded).

Moreover, when x = 100 (in the case of pure Si not including metal additive elements Ti and Zn added to Si at all), it is impossible to improve high cycle durability while implementing high capacity since the high capacity is a trade-off for the cycle durability. To be specific, since the alloy is composed of only Si, which is a high capacity element, the alloy can implement the highest capacity but is significantly degraded as the negative electrode active material by expansion and contraction of Si during charge and discharge. It is therefore revealed that when x = 100, the discharge capacity retention rate is the extremely lowest (only 47%) (see reference example 34 of Table 3 and Fig. 16).

The mass fraction (x) of high capacity element Si in the alloy is preferably in a range of $38 \leq x \leq 72$ from the viewpoint of providing a negative electrode active material which can exhibit the characteristics of implementing high initial capacity and maintaining high cycle characteristics (particularly, discharge capacity retention rate at the 50th cycle) in a balanced manner. When the composition ratio of the first and second additive elements Ti and Zn (later described) is also adequate, it is possible to provide Si alloy negative electrode active materials which have good characteristics (characteristics excellent in both high capacity and cycle durability, which are in a trade-off in existing alloy-based negative electrode active materials) (see Table 3 and reference examples 45 to 56 of reference example C of Fig. 19). To be specific, as the mass fraction (x) of high capacity element Si in the alloy increases, the capacity increases, but the cycle durability tends to lower. However, when x is in the range of $38 \leq x \leq 72$, the alloy is preferable in terms of implementing high capacity (690 mAh/g or more) while maintaining a high discharge capacity retention rate (87% or more) (see reference examples 45 to 56 of reference example C of Table 3 and Fig. 19).

More preferably, the mass fraction (x) of high capacity element Si in the alloy is in a range of $38 \leq x \leq 61$ from the viewpoint of providing a negative electrode active material which can exhibit the characteristics of implementing high initial capacity and maintaining higher cycle characteristics (higher discharge capacity retention rate) in a balanced manner. Moreover, when the composition ratio of the first and second additive elements Ti and Zn is also more adequate, it is possible to provide a Si alloy negative electrode active material having better characteristics (see Table 3 and the region surrounded by the thick solid line in Fig. 20). To be specific, when x is in the more preferable range of $38 \leq x \leq 61$, the alloy is more excellent in implementing high capacity (690 mAh/g or more) while maintaining a higher discharge capacity retention rate (90% or more) at the 50th cycle (see Table 3 and the region surrounded by the thick solid line in Fig. 20).

Particularly preferably, the mass fraction (x) of high capacity element Si in the alloy is in a range of $47 \leq x \leq 53$ from the viewpoint of providing a negative electrode active material which can exhibit the characteristics of providing high initial capacity and maintaining especially high cycle characteristics (particularly high discharge capacity retention rate) in a balanced manner. Moreover, when the ratio of the first and second additive elements Ti and Zn is also more adequate, it is possible to provide a Si alloy negative electrode active material which is of high performance and has the best characteristics (see Table 3 and the region surrounded by the thick solid line in Fig. 21). To be specific, when x is in the particularly preferable range of $47 \leq x \leq 53$, the alloy is particularly excellent in implementing high capacity (1129 mAh/g or more) while maintaining particularly high discharge capacity retention rate (95% or more) at the 50th cycle (see Table 3 and the region surrounded by the thick solid line in Fig. 21).

Herein, when x is in the range of $x \geq 38$, particularly $x \geq 47$, the content rate (balance) of the Si material (x) that can provide an initial capacity of 3200 mAh/g, the first additive element Ti (y), and the second additive element Zn (z) can be in the optimal range (see the ranges surrounded by the thick solid lines in Figs. 17 to 21). Such alloy can exhibit the best characteristics and is excellent in stably and safely maintaining high capacity at the level of vehicle applications for a long period of time. On the other hand, when x is in the range of $x \leq 72$, particularly $x \leq 61$, and more particularly $x \leq 53$, the content rate (the balance) of the high capacity Si material (x) that can provide an initial capacity of 3200 mAh/g, the first additive element Ti (y), and the second additive element Zn (z) can be in the optimal range (see the ranges surrounded by the thick solid lines in Figs. 17 to 21). The alloy can significantly inhibit the amorphous to crystalline phase transition in the Si-Li alloying process, thus increasing the cycle life. To be specific, the discharge capacity retention rate at the 50th cycle can be 87% or more, particularly 90% or more, more particularly 96% or more. Even when x is out of the aforementioned optimal range ($38 \leq x \leq 72$, particularly $38 \leq x \leq 61$, and more particularly $47 \leq x \leq 53$), it is certain that the negative electrode active material that can effectively exhibit the aforementioned operational effects.

In the aforementioned examples of Patent Literature 1, it is disclosed that the batteries show a degradation phenomenon of cycle characteristics by significant reduction of the capacity within only five or six cycles. To be specific, in the examples of Patent Literature 1, the discharge capacity retention rates are already lowered to 90 to 95% at the fifth or sixth cycle and are reduced to substantially 50% to 0% at the 50th cycle. On the other hand, the combination of the first and second additive elements Ti and Zn added to the high capacity Si, which are mutually complementary to each other, is selected through a lot of trial and error and excessive experiments of various combinations of (metal or non-metal) additive elements. When in addition to employment of the aforementioned combination, the content of the high capacity Si material is set in the aforementioned optimal range, the negative electrode active material is excellent in implementing high capacity and considerably reducing the reduction of the discharge capacity retention rate at the 50th cycle. In other words, when the first additive element Ti and the second additive element Zn, which is mutually complementary to Ti, are in the optimal ranges, extremely pronounced synergetic reaction (effect) can be provided, inhibiting the amorphous to crystalline phase transition and thereby preventing the large volume change. Moreover, such alloy is excellent also in implementing high capacity while increasing high cycle durability of electrodes (see Table 3 and Figs. 17 to 21).

(3) Mass Fraction of Ti in Alloy

The range of y in formula (3), which is the mass fraction of Ti in the alloy expressed by the above composition formula of $Si_xTi_yZn_zA_a$, is preferably $0 < y < 62$, more preferably $0 < y \leq 42$, still more preferably $8 \leq y \leq 42$, particularly preferably $19 \leq y \leq 42$, and most preferably $19 \leq y \leq 21$. This is for the following reason. When the mass fraction (y) of the first additive element Ti in the alloy is in the range of $0 < y < 62$, the amorphous to crystalline phase transition of the high capacity Si material can be effectively inhibited by the characteristics (and the synergetic effect with Zn) of Ti. Such alloy can therefore exert an excellent effect on the cycle life (cycle durability), especially on the high discharge capacity retention rate at the 50th cycle (87% or more) (see Table 3 and Fig. 17). Moreover, the content (x) of high capacity Si material can be maintained at a value not less than a certain value ($38 \leq x < 100$), thus implementing extremely high capacity that is impossible for existing carbon negative electrode active materials to implement. Moreover, the alloy can implement high capacity (the initial capacity: 690 mAh or more) equal to or higher than that of existing Sn-based negative electrode active materials (see Table 3 and Fig. 17). On the other hand, with binary alloys (Si-Zn alloy (y=0) in particular) not including any one of the metal additive elements (Ti or Zn) added to high capacity element Si in the ternary alloys expressed by the composition formula $Si_xTi_yZn_z(A_a)$, high cycle durability cannot be maintained compared with the embodiment not falling under the scope of the present invention. Such alloy cannot maintain particularly high discharge capacity retention rate at the 50th cycle adequately (see reference examples 28 to 40 of Table 3 and Fig. 16), causing a large problem that the cycle characteristics are rapidly lowered (degraded). Moreover, when y is in the range of $y < 62$, the alloy can exert adequate characteristics as the negative electrode active material and contribute to exertion of high capacity and cycle durability.

The mass fraction (y) of the first additive element Ti in the alloy is preferably in a range of $0 < y \leq 42$ from the viewpoint of providing a negative electrode active material which can exhibit the characteristics of implementing high initial capacity and maintaining high cycle characteristics (especially a high discharge capacity retention rate at the 50th cycle) in a balanced manner. Moreover, when the content proportion of the first additive element Ti, which has the operational effect of inhibiting the amorphous to crystalline phase transition in the Li alloying process to increase the cycle life, is adequate, it is possible to provide a Si alloy negative electrode active material of good characteristics (see Table 3 and the composition range surrounded by the thick solid line in Fig. 18). To be specific, when the mass fraction (y) of the first additive element Ti in the alloy is in the preferable range of $0 < y \leq 42$, the alloy is preferable in terms of effectively exerting the operational effect of inhibiting the amorphous to crystalline phase transition in the alloying process to increase the cycle life and can maintain the high discharge capacity retention rate (87% or more) at the 50th cycle (see Table 3 and Fig. 18). In this case, the preferable range is the range of compositions (the Ti content particularly is in the range of $0 < y \leq 42$) which can specifically implement high capacities in reference examples 45 to 56 of reference example C (the pentagon surrounded by the thick solid line in Fig. 18). By selecting the range of $0 < y \leq 42$ as for the Ti content in particular, it is possible to provide a Si alloy negative electrode active material which can implement extremely excellent cycle durability (a discharge capacity retention rate of 87% or more) compared with Sn-based negative electrode active materials and multi-component alloy negative electrode active materials according to Patent Literature 1 (see Table 3 and Fig. 18).

More preferably, the mass fraction (y) of the first additive element Ti in the alloy is in a range of $8 \leq y \leq 42$ from the viewpoint of providing a negative electrode active material which can exhibit the characteristics of implementing high initial capacity and maintaining high cycle characteristics (a higher discharge capacity retention rate at the 50th cycle) in a balanced manner. When the content proportion of the first additive element Ti, which has the operational effect of inhibiting the amorphous to crystalline phase transition in the Li alloying process to increase the cycle life, is adequate, it is possible to provide a Si alloy negative electrode active material of good characteristics (see Table 3 and Fig. 19). To be specific, when y is in the more preferable range of $8 \leq y \leq 42$, the alloy can effectively exert the operational effect of inhibiting the amorphous to crystalline phase transition in the alloying process to increase the cycle life and can maintain a high discharge capacity retention rate of 87% or more at the 50th cycle (see Table 3 and Fig. 19). In this case particularly, the more preferable range is the range of compositions (the Ti content particularly is in the range of $8 \leq y \leq 42$) which can specifically implement high capacities and high discharge capacity retention rates of 87% or more at the 50th cycle in reference examples 45 to 56 of reference example C (the hexagon surrounded by the thick solid line in Fig. 19). By selecting the range of $8 \leq y \leq 42$ as for the Ti content in particular, it is possible to provide a Si alloy negative electrode active material which can implement high capacity and extremely excellent cycle durability (a high discharge capacity retention rate) compared with Sn-based negative electrode active materials and the multi-component alloy negative electrode active materials according to Patent Literature 1.

Particularly preferably, the mass fraction (y) of the first additive element Ti in the alloy is in a range of $19 \leq y \leq$

42 from the viewpoint of providing a negative electrode active material which can exhibit the characteristics of implementing high initial capacity and maintaining higher cycle characteristics (high discharge capacity retention rate at the 50th cycle) in a good balanced manner. When the content proportion of the first additive element Ti, which has the operational effect of inhibiting the amorphous to crystalline phase transition in the Li alloying process to increase the cycle life, is adequate, it is possible to provide a Si alloy negative electrode active material of better characteristics (see Table 3 and Fig. 20). To be specific, when y is in the particularly preferable range of $19 \leq y \leq 42$, the alloy can more effectively exert the operational effect of inhibiting the amorphous to crystalline phase transition in the alloying process to increase the cycle life and can maintain a high discharge capacity retention rate of 90% or more at the 50th cycle (see Table 3 and Fig. 20). In this case particularly, the particularly preferable range is the range of compositions (the Ti content particularly is in the range of $19 \leq y \leq 42$) which can implement high capacities and high discharge capacity retention rates of 90% or more at the 50th cycle specifically among reference examples 45 to 56 of reference example C (the hexagon surrounded by the thick solid line in Fig. 20). By selecting the range of $19 \leq y \leq 42$ as for the Ti content in particular, it is possible to provide a Si alloy negative electrode active materials which can implement high capacity and extremely excellent cycle durability (high discharge capacity retention rate) compared with Sn-based negative electrode active materials and multi-component alloy negative electrode active materials according to Patent Literature 1.

Most preferably, the mass fraction (y) of the first additive element Ti in the alloy is in a range of $19 \leq y \leq 21$ from the viewpoint of providing a negative electrode active material which can exhibit the characteristics of implementing high initial capacity and maintaining higher cycle characteristics (high discharge capacity retention rate at the 50th cycle) in the best balanced manner. When the content proportion of the first additive element Ti, which has the operational effect of inhibiting the amorphous to crystalline phase transition in the Li alloying process to increase the cycle life, is the most adequate, it is possible to provide a Si alloy negative electrode active material of the best characteristics (see Table 3 and Fig. 21). To be specific, when y is in the particularly preferable range of $19 \leq y \leq 21$, the alloy can more effectively exert the operational effect of inhibiting the amorphous to crystalline phase transition in the alloying process to increase the cycle life and maintain a high discharge capacity retention rate of 96% or more at the 50th cycle (see Table 3 and Fig. 21). In this case particularly, the most preferable range is the range of compositions (the Ti content particularly is in the range of $19 \leq y \leq 21$) which can specifically implement still higher capacities and high discharge capacity retention rates of 96% or more at the 50th cycle among reference examples 45 to 56 of reference example C (the small rectangle surrounded by the thick solid line in Fig. 21). By selecting the range of $19 \leq y \leq 21$ as for the Ti content in particular, it is possible to provide a Si alloy negative electrode active material which can implement high capacity and extremely excellent cycle durability (higher discharge capacity retention rate) compared with Sn-based negative electrode active materials and multi-component alloy negative electrode active materials according to Patent Literature 1.

Herein, when y is in the range of $y \geq 8$, particularly $y \geq 19$, the content rate of the Si material (x), that provides an initial capacity of 3200 mAh/g, and the first additive element Ti (y) (and the other second additive element Zn) can be in the optimal range (see the ranges surrounded by the thick solid lines in Figs. 19 to 21). Accordingly, by the characteristics (and the synergetic effect with Zn) of Ti, the amorphous to crystalline phase transition of the high capacity Si material can be effectively inhibited, and the cycle life (discharge capacity retention rate in particular) can be extremely increased. To be specific, the discharge capacity retention rate at the 50th cycle can be 87% or more, particularly 90% or more, most particularly 96% or more. The alloy can exert the best characteristics as the negative electrode active material (negative electrode) and is excellent in stably and safely maintaining high capacity in the vehicle applications for a long period of time. On the other hand, when y is in the range of $y \leq 42$ and particularly $y \leq 21$, the content rate (the balance) of the high capacity Si material (x), that can provide an initial capacity of 3200 mAh/g, and the first additive element Ti (y) (and the second additive element Zn) can be in the optimal range (see the ranges surrounded by the thick solid lines in Figs. 18 to 21). Accordingly, the amorphous to crystalline phase transition in the Si-Li alloying process can be extremely inhibited, thus considerably increasing the cycle life. To be specific, the discharge capacity retention rate at the 50th cycle can be 87% or more, particularly 90% or more, most particularly 96% or more. Even if y is out of the aforementioned optimal range ($8 \leq y \leq 42$, particularly $19 \leq y \leq 42$, and most particularly $19 \leq x \leq 21$), it is certain that the negative electrode active material that can effectively exhibit the aforementioned operational effects.

In the aforementioned examples of Patent Literature 1, it is disclosed that the batteries show a degradation phenomenon of cycle characteristics by significant reduction of the capacity within only five or six cycles. To be specific, in the examples of Patent Literature 1, the discharge capacity retention rates are already reduced to 90 to 95% at the fifth and sixth cycles and are reduced to substantially 50% to 0% at the 50th cycle. On the other hand, the first additive element Ti (and the combination with the second additive element Zn, which is mutually complementary to Ti) to the high capacity Si (only one combination) is selected through a lot of trial and error and excessive experiments of various combinations of (metal or non-metal) additive elements. When the content of Ti is set in the aforementioned optimal range in addition to employing the aforementioned combination, the alloy is excellent in significantly reducing the reduction of the discharge capacity retention rate at the 50th cycle. To be specific, when the first additive element Ti (and the second additive element Zn, which is mutually complementary to Ti) is in the optimal range, extremely pronounced synergetic reaction (effect) can be provided, thus inhibiting the amorphous to crystalline phase transition in the Si-Li alloying process and thereby preventing the large volume change. Moreover, the alloy is excellent also in implementing high capacity while increasing high cycle durability of electrodes (see Table 3 and Figs. 17 to 21).

(4) Zn Mass fraction in Alloy

The range of z in formula (4), which is the mass fraction of Zn in the alloy expressed by the above composition formula of $Si_xTi_yZn_zA_a$, is preferably $0 < z < 62$, more preferably $0 < z \leq 39$, still more preferably $12 \leq z \leq 39$, particularly preferably $12 \leq z \leq 35$, and most preferably $26 \leq z \leq 35$. This is for the following reason. When the mass fraction (z) of Zn, which can prevent the capacity as the electrode from being reduced even if the content of the first additive element in the alloy is increased, is in the range of $0 < z < 62$, the amorphous to crystalline phase transition of the high capacity Si material can be effectively inhibited by the characteristics of Ti and the synergetic effect between Ti and Zn. Accordingly, the alloy can exert an excellent effect on the cycle life (cycle durability), especially the high discharge capacity retention rate at the 50th cycle (87% or more) (see Table 3 and Fig. 17). Moreover, the content (x) of the high capacity Si material can be maintained to be a certain value or higher ($38 \leq x < 100$), implementing extremely high capacity compared with existing carbon-based negative electrode active materials. It is therefore possible to provide an alloy that can implement high capacity equal to or higher than that of existing Sn-based negative electrode active materials (see Fig. 17). On the other hand, with binary alloys (Si-Ti alloy (z=0) in particular) not including any one of the metal additive elements (Ti or Zn) added to Si in the ternary alloys expressed by the composition formula $Si_xTi_yZn_z(A_a)$, it is not possible to implement high cycle durability compared with the embodiment not falling under the scope of the present invention. Such alloys especially cannot adequately maintain high discharge capacity retention rates at the 50th cycle (see reference examples 28 to 40 of Table 3 and Fig. 16), causing a significant problem that the cycle characteristics are rapidly lowered (degraded). Moreover, when z is in the range of z < 62, the alloy can exert adequate characteristics as the negative electrode active material and can contribute to exertion of high capacity and cycle durability.

The mass fraction (z) of the second additive element Zn in the alloy is preferably in a range of $0 < z \leq 39$ from the viewpoint of providing a negative electrode active material which can exhibit the characteristics of implementing high initial capacity and maintaining high cycle characteristics (especially high discharge capacity retention rate at the 50th cycle) in a balanced manner. It is extremely important and effective to select the first additive element Ti, which can inhibit the amorphous to crystalline phase transition in the Li alloying process to increase the cycle life, and the second additive element Zn, which can prevent the capacity as the negative electrode active material (negative electrode) from being reduced even if the concentration of the first additive element is increased. It is found that the first and second additive elements Ti and Zn produce a pronounced difference in operational effects between the alloys of the embodiment not falling under the scope of the present invention and conventionally-known ternary alloys and quaternary or higher alloys of Patent Literature 1 and the like and binary alloys including Si-Ti alloys and Si-Zn alloys. When the content proportion of the second additive element Zn (and the first additive element Ti, which is complementary to Zn), is adequate, it is possible to a provide Si alloy negative electrode active material of good characteristics (see Table 3 and the composition range surrounded by the thick solid line in Fig. 18). To be specific, when the mass fraction (z) of the second additive element Zn in the alloy is in the preferable range of $0 < z \leq 39$, the effect of inhibiting the amorphous to crystalline phase transition in the alloying process can be exerted to increase the cycle life through the synergetic effect (mutually complementary properties) with the first additive element Ti. Accordingly, the alloy can maintain a high discharge capacity retention rate (87% or more) at the 50th cycle (see Table 3 and Fig. 18). In this case, the preferable range is the range of compositions (the Zn content particularly is in the range of $0 < z \leq 39$) which can specifically implement high capacities in reference examples 45 to 56 of reference example C (the pentagon surrounded by the thick solid line in Fig. 18). By selecting the aforementioned composition ranges (the range of $0 < z \leq 39$ as for the Zn content in particular), the alloy can implement extremely excellent cycle durability through the synergetic effect (mutually complementary properties) with the first additive element Ti compared with Sn-based negative electrode active materials and the multi-component alloy negative electrode active materials according to Patent Literature 1. It is therefore possible to provide Si alloy negative electrode active materials which can implement a discharge capacity retention rate of 87% or more at the 50th cycle (see Table 3 and the composition range surrounded by the thick solid line in Fig. 18).

More preferably, the mass fraction (z) of the second additive element Zn in the alloy is in a range of $12 \leq Z \leq 39$ from the viewpoint of providing a negative electrode active material which can exhibit a good balance of characteristics of implementing high initial capacity and maintaining high cycle characteristics through the synergetic effect (mutually complementary properties) with the first additive element Ti. This is because it is possible to provide a Si alloy negative electrode active material of good characteristics when the content proportion of the second additive element Zn, which can exert the effect of inhibiting the amorphous to crystalline phase transition in the Li alloying process through the synergetic effect (mutually complementary properties) with Ti to increase the cycle life, is adequate. To be specific, when z is in the more preferable range of $12 \leq y \leq 39$, the effect of inhibiting the amorphous to crystalline phase transition in the alloying process can be effectively exerted through the synergetic effect with the first additive element, and the cycle life can be increased. Accordingly, the alloy can maintain a high discharge capacity retention rate of 87% or more at the 50th cycle (see Table 3 and Fig. 19). In this case, particularly, the aforementioned more preferable range is the range of compositions (the Zn content particularly is in the range of $12 \leq y \leq 39$) which can specifically implement high capacities and high discharge capacity retention rates of 87% or more at the 50th cycle in reference examples 45 to 56 of reference example C (the hexagon surrounded by the thick solid line in Fig. 19). By selecting the aforementioned composition ranges (the range of $12 \leq z \leq 39$ as for the Zn content in particular), it is possible to provide a Si alloy negative electrode active material which can implement high capacity and extremely excellent cycle durability through the synergetic properties of Zn with Ti compared with Sn-based negative electrode active materials and the multi-component alloy negative electrode active materials according to Patent Literature 1.

Particularly preferably, the mass fraction (z) of the second additive element Zn in the alloy is in a range of $12 \leq z \leq 35$ from the viewpoint of providing a negative electrode active material which can exhibit the characteristics of implementing high initial capacity and maintaining higher cycle characteristics (a high discharge capacity retention rate at the 50th cycle) in a good balanced manner. This is because it is possible to provide a Si alloy negative electrode active material of better characteristics when the content proportion of the second additive element Zn, which can exert the effect of inhibiting the amorphous to crystalline phase transition in the Li alloying process through the synergetic effect (mutually complementary properties) with Ti to increase the cycle life, is more adequate. To be specific, when z is in the particularly preferable range of $12 \leq z \leq 35$, the effect of inhibiting the amorphous to crystalline phase transition in the alloying process can be more effectively exerted through the synergetic effect with the first additive element, and the cycle life can be increased. Accordingly, the alloy can maintain a high discharge capacity retention rate of 90% or more at the 50th cycle (see Table 3 and Fig. 20). In this case, particularly, the particularly preferable range is the range of compositions (the Zn content particularly is in the range of $12 \leq z \leq 35$) which can specifically implement high capacities and high discharge capacity retention rates of 90% or more at the 50th cycle in reference examples 45 to 56 of reference example C (the hexagon surrounded by the thick solid line in Fig. 20). By selecting the aforementioned composition ranges (the range of $12 \leq z \leq 35$ as for the Zn content in particular), it is possible to provide a Si alloy negative electrode active material which can implement high capacity and extremely excellent cycle durability through the synergetic properties of Zn with Ti compared with Sn-based negative electrode active materials and the multi-component alloy negative electrode active materials according to Patent Literature 1.

Most preferably, the mass fraction (z) of the second additive element Zn in the alloy is in a range of $26 \leq z \leq 35$ from the viewpoint of providing a negative electrode active material which can exhibit the characteristics of implementing high initial capacity and maintaining higher cycle characteristics (high discharge capacity retention rate at the 50th cycle) in the best balanced manner. This is because it is possible to provide a Si alloy negative electrode active material of the best characteristics when the content proportion of the second additive element Zn, which can exert the effect of inhibiting the amorphous to crystalline phase transition in the Li alloying process through the synergetic effect (mutually complementary properties) with Ti to increase the cycle life, is the most adequate. To be specific, when z is in the particularly preferable range of $26 \leq y \leq 35$, the effect of inhibiting the amorphous to crystalline phase transition in the alloying process can be more effectively exerted through the synergetic effect (mutually complementary properties) with Ti, and the cycle life can be increased. Accordingly, the alloy can maintain a high discharge capacity retention rate of 96% or more at the 50th cycle (see Table 3 and Fig. 21). In this case, particularly, the most preferable range is the range of compositions (the Ti content particularly is in the range of $26 \leq z \leq 35$) which can specifically implement still higher capacities and high discharge capacity retention rates of 96% or more at the 50th cycle in reference examples 45 to 56 of reference example C (the small rectangle surrounded by the thick solid line in Fig. 21). By selecting the aforementioned ranges (the range of $26 \leq z \leq 35$ as for the Zn content in particular), it is possible to provide a Si alloy negative electrode active material which can implement high capacity and extremely excellent cycle durability through the synergetic properties with Ti compared with Sn-based negative electrode active materials and the multi-component alloy negative electrode active materials according to Patent Literature 1.

Herein, when z is in the range of $z \geq 12$, particularly $z \geq 26$, the content rate (balance) of the Si material (x), that provides a high initial capacity of 3200 mAh/g, and the first additive element Ti (y) to the different second additive element Zn can be in the optimal range (see the ranges surrounded by the thick solid lines in Figs. 19 to 21). Accordingly, even if the concentration of Ti, which can inhibit the amorphous to crystalline phase transition, is increased, the reduction of the capacity as the negative electrode active material can be effectively inhibited by the characteristics of Zn (the synergic effect or mutually complementary properties with Ti), and the cycle life (the discharge capacity retention rate in particular) can be increased. To be specific, the discharge capacity retention rate at the 50th cycle can be 87% or more, particularly 90% or more, most particularly 96% or more. The alloy can therefore exert the best characteristics as the negative electrode active material (negative electrode) and is excellent in stably and safely maintaining high capacity of the level of vehicle applications for a long period of time. On the other hand, when z is in the range of $z \leq 39$ and particularly $z \leq 35$, the content rates (the balances) of the second additive element Zn to the high capacity Si material (x), that can provide a high initial capacity of 3200 mAh/g, and the first additive element Ti (y) can be in the optimal range (see the ranges surrounded by the thick solid lines in Figs. 18 to 21). Accordingly, the amorphous to crystalline phase transition in the Si-Li alloying process can be extremely inhibited, thereby considerably increasing the cycle life (the discharge capacity retention rate at the 50th cycle particularly). To be specific, the discharge capacity retention rate at the 50th cycle is 87% or more, particularly 90% or more, most particularly 96% or more. Even if z is out of the afore-mentioned optimal range ($12 \leq z \leq 39$, particularly $12 \leq z \leq 35$, and most particularly $26 \leq z \leq 35$), it is certain that the negative electrode active material that can effectively exert the aforementioned operational effects.

In the aforementioned examples of Patent Literature 1, it is disclosed that the batteries show a degradation phenomenon of cycle characteristics by significant reduction of the capacity within only five or six cycles. To be specific, in the examples of Patent Literature 1, the discharge capacity retention rates are already lowered to 90 to 95% at the fifth or sixth cycles and are lowered to substantially 50% to 0% at the 50th cycle. On the other hand, the combination (only one combination) of the first and second additive elements Ti and Zn, which are added to the high capacity Si and are mutually complementary to each other, is selected through a lot of trial and error and excessive experiments of various combinations of (metal or non-metal) additive elements. When the content of Zn is set in the aforementioned optimal range in addition to employing the aforementioned combination, the alloy is excellent in considerably reducing the reduction of the discharge capacity retention rate at the 50th cycle. In other words, when the second additive element Zn (and the first additive element Ti, which is mutually complementary to Zn) is in the optimal range, extremely pronounced synergetic reaction (effect) can inhibit the amorphous to crystalline phase transition in the Si-Li alloying process, thereby preventing the large volume change. Moreover, the alloy is excellent also in implementing high capacity while increasing high cycle durability of electrodes.

(5) A Mass Fraction in Alloy

The range of a in formula (5), which is the mass fraction of A in the alloy expressed by the above composition formula of $Si_xTi_yZn_zA_a$, is $0 \leq a < 0.5$ and preferably $0 \leq a < 0.1$. A indicates substances which exist in raw materials of the Si alloy or substances unavoidably mixed into the Si alloy in the manufacturing process as described above. A is unnecessary under normal conditions but is allowed to be included in the alloy because the content of A is not high enough to influence on the characteristics of the Si alloy.

The average particle diameter of the Si alloy only needs to be equal to the average particle diameter of existing negative electrode active materials included in the negative electrode active material layer 15 and is not particularly limited. The average particle diameter of the Si alloy needs to be preferably in a range from 1 to 20 $\mu$m from the viewpoint of implementing high output but is not limited to the above range. It is certain that the average particle diameter of the Si alloy may be out of the aforementioned range as long as the Si alloy can effectively exert the operational effect. The shape of the Si alloy is not particularly limited and can be spherical, elliptical, cylindrical, polygonal prism-shaped, flake-shaped, or amorphous.

Manufacturing Method of Alloy

The method of manufacturing the alloy expressed by the composition formula $Si_xTi_yM_zA_a$ according to the embodiment is not particularly limited and can be selected from various types of conventionally-known manufacturing methods. In other words, every kind of manufacturing methods can be applied to the embodiment because there are very few differences in the alloy state and characteristics between the manufacturing methods.

To be specific, the method of manufacturing an alloy expressed by the composition formula $Si_xTi_yM_zA_a$ in the form of particles can be mechanical alloying, arc plasma melting alloying, and the like, for example.

With the aforementioned methods of manufacturing alloy in the form of particles, the particles are mixed with a binder, an electrically-conductive auxiliary agent, and a viscosity modifying solvent to prepare slurry. The slurry is used to form slurry electrodes. Accordingly, the electrodes can be easily mass produced and are excellent in being easily put into practical use as actual electrodes for batteries.

Carbon material

The carbon material that can be used in the present invention is not particularly limited and can be: graphite as high-crystallinity carbon such as natural graphite and artificial graphite; low-crystallinity carbon such as soft carbon and hard carbon; carbon black such as Ketjenblack, acetylene black, channel black, lamp black, oil furnace black, and thermal black; and carbon materials such as fullerene, carbon nanotubes, carbon nanofibers, carbon nanohorns, and carbon fibrils. Among the aforementioned materials, graphite is preferably used.

In the embodiment, the negative electrode active material is a mixture of the carbon material and the aforementioned alloy. This can implement a good balance between providing high initial capacity and maintaining higher cycle characteristics.

The Si alloy is unevenly distributed in the negative electrode active material layer in some cases. In this case, individual sections of Si alloy exhibit different potentials and different capacities. Accordingly, some of the sections of Si alloy within the negative electrode active material layer can react with Li ions excessively, and some sections of Si alloy cannot react with Li ions. The reaction of the Si alloy within the negative electrode active material layer with Li ions can therefore occur inhomogeneously. When the sections of Si alloy that can excessively react with Li ions among the aforementioned sections of Si alloy act excessively, the electrolyte can be decomposed by significant reaction with the electrolyte, or the structure of the Si alloy can be broken by excessive expansion. As a result, when the Si alloy has excellent characteristics but is distributed unevenly, the cycle characteristics could be degraded as the negative electrode for an electric device.

However, when the Si alloy is mixed with a carbon material, the aforementioned problem can be solved. To be specific, when being mixed with a carbon material, the Si alloy can be distributed uniformly within the negative electrode active material layer. Accordingly, every section of the Si alloy within the negative electrode active material layer exhibits equal reactive properties, so that the degradation of the cycle characteristics is prevented.

When the carbon material is mixed, the content of the Si alloy in the negative electrode active material layer is reduced, and the initial capacity can be therefore reduced. However, the carbon material itself is reactive to Li ions, and the reduction of the initial capacity is relatively small. In other words, the negative electrode active material according to the embodiment exhibits a higher effect on improving the cycle characteristics than the effect on reducing the initial capacity.

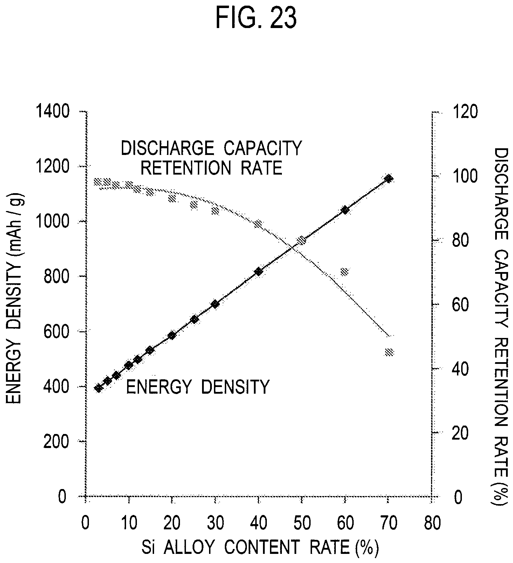

The carbon material is less likely to change in volume in the process of reacting with Li ions compared with the Si alloy. Accordingly, even when the Si alloy undergoes a large volume change, the volume change due to the reaction with Li has a relatively minor influence on the entire negative electrode active material. The aforementioned effect can be understood from the results of examples that the higher the content rate of the carbon material (the lower the content rate of the Si alloy), the higher the cycle characteristics (see Table 4 and Fig. 23).

The contained carbon material can improve the power consumption (Wh). To be specific, the carbon material has a relatively low potential compared with the Si alloy and can reduce the relatively high potential of the Si alloy. The potential of the entire negative electrode is therefore reduced, thus improving the power consumption (Wh). This effect is advantageous particularly in vehicle applications among electric devices, for example.

The shape of the carbon material is not particularly limited and can be spherical, elliptical, cylindrical, polygonal columnar, flaky, or amorphous.

The average particle diameter of the carbon material is not particularly limited but is preferably 5 to 25 $\mu$m and more preferably 5 to 10 $\mu$m. In regard to the comparison with the average particle diameter of the Si alloy, the average particle diameter of the carbon material may be either equal to or different from that of the Si alloy but is preferably different from that of the Si alloy. The average particle diameter of the Si alloy is smaller than that of the carbon material. When the average particle diameter of the carbon material is larger than that of the Si alloy, particles of the carbon material are distributed homogeneously, and the Si alloy is located between the particles of the carbon material. Accordingly, the Si alloy can be therefore homogeneously located within the negative electrode active material layer.

The ratio in average particle diameter of the carbon material to the Si alloy (the average particle diameter of the Si alloy / the average particle diameter of the carbon material) is preferably not less than 1/250 and less than 1 and more preferably not less than 1/100 and not more than 1/4.

The mixing proportions of the Si alloy and the carbon material in the negative electrode active material are not particularly limited and can be properly selected in accordance with the desired intended use or the like. The content rate of the Si alloy in the negative electrode active material is preferably 3 to 70 mass%. In an embodiment, the content rate of the Si alloy in the negative electrode active material is more preferably 30 to 50 mass%. In another embodiment, the content rate of the Si alloy in the negative electrode active material is more preferably 50 to 70 mass%.

The battery can have high initial capacity when the content rate of the Si alloy is not less than 3 mass%, which is preferable. On the other hand, the battery can exhibit high cycle characteristics when the content rate of the Si alloy is not more than 70 mass%, which is preferable.

Method of Manufacturing Negative electrode active material

The negative electrode active material can be manufactured by a publicly-known method without any particular restriction. Typically, the negative electrode active material layer is formed by the aforementioned manufacturing methods of the Si alloy. To be specific, the Si alloy is produced in the form of particles by using mechanical alloying method, arc plasma melting method, or the like and is then mixed with the carbon material, binder, electrically-conductive auxiliary agent, and viscosity modifying solvent to form slurry. The slurry is used to form slurry electrodes. In this process, the negative electrode active material with a desired content of the Si alloy can be manufactured by properly changing the amount of the Si alloy in the form of particles and the amount of the carbon material.

(Common Requirements for Positive and negative electrode active material layers 13 and 15)

Hereinafter, a description is given of common requirements for the positive and negative electrode active material layers 13 and 15.

The positive and negative electrode active material layers 13 and 15 contain a binder, an electrically-conductive auxiliary agent, an electrolyte salt (lithium salt), an ion conducting polymer, and the like.

Binder

The binder used in the active material layers is not particularly limited, and examples thereof can be the following materials: thermoplastic polymers such as polyethylene, polypropylene, polyethylene terephthalate (PET), polyethernitrile (PEN), polyacrylonitrile, polyimide, polyamide, polyamide-imide, cellulose, carboxymethyl cellulose (CMC), ethylenevinyl acetate copolymer, polyvinylchloride, styrene-butadiene rubber (SBR), isoprene rubber, butadiene rubber, ethylene-propylene rubber, ethylene-propylene-diene copolymer, styrene-butadiene-styrene block copolymer and hydrogenated product thereof, and styrene-isoprene-styrene block copolymer and hydrogenated product thereof; fluorine resin such as polyvinylidene fluoride (PVdF), polytetrafluoroethylene (PTFE), tetrafluoroethylene-hexafluoropropylene copolymer (FEP), tetrafluoroethylene-perfluoroalkylvinyl ether copolymer (PFA), ethylene-tetrafluoroethylene copolymer (ETFE), polychlorotrifluoroethylene (PCTFE), ethylene-chlorotrifluoroethylene copolymer (ECTFE), and polyvinyl fluoride (PVF); vinylidene fluoride based fluorine rubber such as vinylidene fluoride-hexafluoropropylene based fluorine rubber (VDF-HFP based fluorine rubber), vinylidene fluoride-hexafluoropropylene-tetrafluoroethylene based fluorine rubber (VDF-HFP-TFE based fluorine rubber), vinylidene fluoride-pentafluoropropylene based fluorine rubber (VDF-PFP based fluorine rubber), vinylidene fluoride-pentafluoropropylene-tetrafluoroethylene based fluorine rubber (VDF-PFP-TFE based fluorine rubber), vinylidene fluoride-perfluoromethylvinylether-tetrafluoroethylene based fluorine rubber (VDF-PFMVE-TFE based fluorine rubber), vinylidene fluoride-chlorotrifluoroethylene based fluorine rubber (VDF-CTFE based fluorine rubber); epoxy resin; or the like. Among the aforementioned substances, polyvinylidene fluoride, polyimide, styrene-butadiene rubber, carboxymethylcellulose, polypropylene, polytetrafluoroethylene, polyacrylonitrile, polyamide, and polyamide-imide are more preferable, and polyamide is still more preferable. These preferable materials as the binder are excellent in heat resistance and have a very wide potential window. The above preferable materials as the binder are therefore stable at both of the positive electrode and negative electrode potentials and can be used in the active material layers. Moreover, the materials having relatively high binding force, such as polyamide, can suitably hold the Si alloy on the carbon material. The binder can be composed of only one or a combination of two of the aforementioned materials as the binder.

The amounts of binder contained in the active material layers are not particularly limited but need to be large enough to bind the active materials. The content of binder in the active material layers is preferably 0.5 to 15 mass% and more preferably 1 to 10 mass%.

Electrically-Conductive Auxiliary Agent

The electrically-conductive auxiliary agent is an additive blended to improve the electrical conductivity of the positive or negative electrode active material layers. The electrically-conductive auxiliary agent can be a carbon material, including carbon black such as acetylene black, graphite, and vapor-grown carbon fibers. When the active material layers contain the electrically-conductive auxiliary agent, electron networks are effectively formed within the active material layers, thus contributing an improvement in output characteristics of the battery.

Alternatively, an electrically-conductive binder functioning as both of the electrically-conductive auxiliary agent and binder may be replaced for the electrically-conductive auxiliary agent and binder or may be used together with one or both of the electrically-conductive auxiliary agent and binder. The electrically-conductive binder can be TAB-2 (manufactured by Hohusen Corp.), which is already commercially available.

The content of the electrically-conductive auxiliary agent mixed into each active material layer is not less than 1 mass% of the total amount of the active material layer, preferably not less than 3 mass%, and more preferably not less than 5 mass%. The content of the electrically-conductive auxiliary agent mixed into each active material layer is not more than 15 mass% of the total amount of the active material layer, preferably not more than 10 mass%, and more preferably not more than 7 mass%. When the mixing ratio (the content) of the electrically-conductive auxiliary agent in each active material layer, in which the active material itself has low electron conductivity and electrode resistance can be reduced in accordance with the amount of the electrically-conductive auxiliary agent, is set in the aforementioned range, the following effect is exerted. It is possible to guarantee sufficient electron conductivity without inhibiting the electrode reaction and prevent reduction of energy density due to reduction of electrode density. Accordingly, the energy density can be increased by an increase in electrode density.

Electrolyte Salt (lithium salt)

The electrolyte salt (lithium salt) can be $Li(C_2F_5SO_2)_2N$, $LiPF_6$, $LiBF_4$, $LiClO_4$, $LiAsF_6$, $LiCF_3SO_3$, or the like.

Ion Conducting Polymer

The ion conducting polymer can be polyethylene oxide (PEO)-based or polypropylene oxide (PPO)-based polymer, for example.

The mixing ratios of the components contained in the positive electrode active material layer and contained in the negative electrode active material layer employing the Si alloy in the form of particles of (5)(ii) shown above are not particularly limited. The mixing ratios can be adjusted by properly referring to publicly-known findings about non-aqueous secondary batteries.

The thickness of each active material layer (the active material layer on one side of each current collector) is not particularly limited and can be determined by properly referring to conventionally-known findings about batteries. In view of the intended use (such as output power-desirable or energy-desirable applications) and the ion conductivity, as an example, the thickness of each active material layer is set to typically about 1 to 500 $\mu$m and preferably set to 2 to 100 $\mu$m.

<Current Collector>

The current collectors 11 and 12 are composed of electrically-conductive materials. The size of the current collectors is determined in accordance with the intended use of the battery. The current collectors have large area when the current collectors are used in large batteries required to have high energy density, for example.

The thickness of the current collectors is also not limited particularly. The thickness of the current collectors is typically about 1 to 100 $\mu$m.

The shape of the current collectors is also not limited particularly. In the laminated battery 10 illustrated in Fig. 1, the shape of the current collectors can be mesh (expanded grid or the like) or the like as well as current collecting foil.

When alloy thin film of the negative electrode active material is directly formed on each negative electrode current collector 12 by sputtering or the like, the current collectors are desirably composed of current collecting foil.

The materials constituting the current collectors are not particularly limited. The current collectors can be made of metal or resin which is composed of an electrically-conductive polymer material or composed of a non-electrically-conductive polymer material with an electrically-conductive filler added thereto, for example.

To be specific, the metal of the current collectors can be aluminum, nickel, iron, stainless, titanium, copper, or the like. In addition to these materials, metal clad of nickel and aluminum, metal clad of copper and aluminum, plated materials of the same combinations, and the like are preferably used. Alternatively, the current collectors may be composed of foil with the metal surface thereof coated with aluminum. Among these materials, aluminum, stainless, copper, and nickel are preferable from the viewpoint of electron conductivity, battery operating potential, adherence of the negative electrode active material to the current collectors by sputtering, and the like.

Examples of the electrically-conductive polymer material include polyaniline, polypyrrole, polythiophene, polyacetylene, polyparaphenylene, polyphenylenevinylene, polyacrylonitrile, and polyoxadiazole. These electrically-conductive polymer materials exhibit sufficient conductivity with no electrically-conductive filler added thereto and therefore have advantages of simplifying the manufacturing process and reducing the weight of the current collectors.

Examples of the non-electrically-conductive polymer material include polyethylene (PE: high-density polyethylene (HDPE), low-density polyethylene (LDPE), and the like), polypropylene (PP), polyethylene terephthalate (PET), polyethernitrile (PEN), polyimide (PI), polyamide-imide (PAI), polyamide (PA), polytetrafluoroethylene (PTFE), styrene-butadiene rubber (SBR), polyacrylonitrile (PAN), polymethylacrylate (PMA), polymethylmethacrylate (PMMA), polyvinylchloride (PVC), polyvinylidene fluoride (PVdF), and polystyrene (PS). These non-electrically-conductive polymer materials can be excellent in resistance to electric potential or resistance to solvent.

To the aforementioned electrically-conductive and non-electrically-conductive polymer materials, an electrically-conductive filler can be added if necessary. When the resin constituting the base material of the current collectors is composed of only a non-electrically-conductive polymer in particular, an electrically-conductive filler needs to be added to give conductivity to the resin.

The electrically-conductive filler can be used without any particular restriction but needs to be an electrically-conductive substance. For example, the electrically-conductive filler can be metal, electrically-conductive carbon, or the like as materials excellent in conductivity, potential resistance, or lithium ion blocking properties, for example. The metal as the electrically-conductive filler is not particularly limited but is preferably at least a kind of metal selected from the group consisting of Ni, Ti, Al, Cu, Pt, Fe, Cr, Sn, Zn, In, Sb, K, and alloys and metal oxides including the same. The electrically-conductive carbon as the electrically-conductive filler is not particularly limited and preferably contains at least a kind of carbon selected from the group consisting of acetylene black, Vulcan, black pearl, carbon nanofibers, Ketjenblack, carbon nanotubes, carbon nanohones, carbon nanoballoons, and fullerene.

The amount of electrically-conductive filler added is not particularly limited but needs to be large enough to give sufficient conductivity to the current collectors, which is generally about 5 to 35 mass%.

<Electrolyte Layer>

The electrolyte constituting the electrolyte layer 17 can be a liquid or polymer electrolyte.

The liquid electrolyte has a configuration in which a lithium salt (an electrolyte salt) is dissolved in an organic solvent. Examples of the organic solvent include carbonates such as ethylene carbonate (EC), propylene carbonate (PC), butylene carbonate (BC), vinylene carbonate (VC), dimethyl carbonate (DMC), diethyl carbonate (DEC), ethylmethyl carbonate (EMC), or methylpropyl carbonate (MPC).

The lithium salt can be a compound that can be added to the active material layers of the electrodes such as $Li(CF_3SO_2)_2N$, $Li(C_2F_5SO_2)_2N$, $LiPF_6$, $LiBF_4$, $LiAsF_6$, $LiTaF_6$, $LiClO_4$, or $LiCF_3SO_3$.

On the other hand, the polymer electrolytes are classified to gel electrolytes including electrolytic solution and intrinsic polymer electrolytes not including electrolytic solution.

The gel electrolytes have a configuration in which the aforementioned liquid electrolyte (electrolytic solution) is injected into a matrix polymer composed of ion-conductive polymer. Using a gel polymer electrolyte as the electrolyte is excellent because the lack of fluidity of the electrolyte can facilitate blocking ion conduction between layers.

The ion conductive polymer used as the matrix polymer is polyethylene oxide (PEO), polypropylene oxide (PPO), copolymers thereof, or the like, for example. In the above polyalkylene oxide, electrolyte salt such as lithium salt is well soluble.

The proportion of the aforementioned liquid electrolyte (electrolytic solution) in the gel electrolyte should not be particularly limited but is desirably about several to 90 mass% from the viewpoint of ion conductivity and the like. In the embodiment, the gel electrolyte containing a lot of electrolytic solution (the proportion thereof is not less than 70 mass%) is particularly effective.

When the electrolyte layer is composed of liquid electrolyte, gel electrolyte, or intrinsic polymer electrolyte, the electrolyte layer may include a separator. Examples of the specific configuration of the separator (including non-woven fabric) are microporous membrane composed of olefin, such as polyethylene and polypropylene, porous plates, non-woven fabric, and the like.

Intrinsic polymer electrolytes have a configuration in which supporting salt (lithium salt) is dissolved in the matrix polymer and does not contain any organic solvent as a plasticizer. Accordingly, when the electrolyte layers are composed of an intrinsic polymer electrolyte, there is no fear of liquid leakage from the battery, thus increasing the reliability of the battery.

The matrix polymer of gel electrolytes or intrinsic polymer electrolytes can exert excellent mechanical strength by forming a cross-linked structure. To form a cross-linked structure, by using an adequate polymerization initiator, a polymerizable polymer (PEO or PPO, for example) for forming polymer electrolyte is subjected to polymerization such as thermal polymerization, ultraviolet polymerization, radiation polymerization, or electron beam polymerization.

<Current Collecting Plate and Lead>

Current collecting plates may be used for the purpose of extracting current out of the battery. The current collecting plates are electrically connected to the current collectors and leads and protrude out of the laminated sheets as the battery exterior member.

The materials constituting the current collecting plates are not particularly limited and can be publicly-known highly-electrically-conductive material conventionally used as current collecting plates for lithium ion secondary batteries. The material constituting the current collecting plates is preferably a metallic material such as aluminum, copper, titanium, nickel, stainless steel (SUS), or alloys thereof and is more preferably, aluminum, copper, or the like from the viewpoint of light weight, corrosion resistance, and high conductivity. The positive and negative electrode current collecting plates may be made of a same material or different materials.

The positive and negative electrode terminal leads are also used when needed. The positive and negative electrode terminal leads can be composed of terminal leads used in publicly-known lithium ion secondary batteries. It is preferable that the parts of the terminal leads protruding out of the battery exterior member 29 are covered with heat-resistant insulating heat-shrinkable tubes so that electric leakage due to contact with peripheral devices and wires cannot influence products (for example, automobile components, particularly, electronic devices).

<Battery Exterior Member>

The battery exterior member 29 can be composed of a publicly-known metallic can casing or a bag-shaped casing which can cover the power generation element and is made of aluminum-contained laminated film. The laminated film can be a three-layer laminated film composed of PP, aluminum, and nylon stacked in this order, for example, but is not limited to the thus-configured film. The battery exterior member 29 is preferably made of laminated film for the laminated film is excellent in resistance to high output power and cooling performance and can be suitably used in batteries of large devices for EVs, HEVs, and the like.

The above-described lithium ion secondary battery can be manufactured by a conventionally-known manufacturing method.

<Exterior Configuration of Lithium Ion Secondary Battery>

Fig. 2 is a perspective view illustrating an exterior of a laminate-type flat lithium ion secondary battery.

As illustrated in Fig. 2, a laminate-type flat lithium ion secondary battery 50 has a rectangular flat shape. From both sides of the battery 50, positive and negative electrode current collecting plates 58 and 59 for extracting electric power are protruded. A power generation element 57 is wrapped with a battery exterior member 52 of the lithium ion secondary battery 50, and the edge thereof is thermally fused. The power generation element 57 is sealed with the positive and negative electrode current collecting plates 58 and 59 protruded to the outside. Herein, the power generation element 57 corresponds to the power generation element 21 of the lithium ion secondary battery (laminated battery) 10 illustrated in Fig. 1. The power generation element 57 includes plural single cell layers (single cells) 19, each of which includes a positive electrode (a positive electrode active material layer) 13, an electrolyte layer 17, and a negative electrode (a negative electrode active material layer) 15.

The aforementioned lithium ion secondary battery is not limited to batteries having a laminate-type flat shape (laminate cells). The winding-type lithium batteries are not particularly limited and may include batteries having a cylindrical shape (coin cells), batteries having a prism shape (rectangular cells), batteries having a rectangular flat shape like deformed cylindrical batteries, and also cylinder cells. In cylindrical or prism-shaped lithium ion secondary batteries, the package may be composed of either laminated film or a conventional cylindrical can (metallic can) and is not limited particularly. Preferably, the power generation element is packed with aluminum laminated film. Such configuration can reduce the weight of the lithium ion secondary battery.

The protrusion configuration of the positive and negative electrode current collecting plates 58 and 59 illustrated in Fig. 2 is also not limited particularly. The positive and negative electrode current collecting plates 58 and 59 may be protruded from a same side or may be individually divided into plural portions to be protruded from different sides. The protrusion of the positive and negative electrode current collecting plates 58 and 59 is not limited to the configuration illustrated in Fig. 2. Moreover, in winding-type lithium ion batteries, terminals may be formed using a cylindrical can (a metallic can), for example, instead of the current collecting plates.

As described above, negative electrodes and lithium ion secondary batteries employing the negative electrode active material for a lithium ion secondary battery of the embodiment can be suitably used as high-capacity power sources of electric vehicles, hybrid electric vehicles, fuel cell vehicles, hybrid fuel cell vehicles, and the like. The negative electrodes and lithium ion secondary batteries employing the negative electrode active material for a lithium ion secondary battery of the embodiment can be thus suitably used in vehicle driving power source and auxiliary power source requiring high energy density per volume and high power density per volume.

The aforementioned embodiment shows the lithium ion batteries as the electric device by way of example but is not limited thereto. The embodiment is applicable to another type of secondary batteries and is also applicable to primary batteries. Moreover, the embodiment is applicable to capacitors as well as batteries.

EXAMPLES

The present invention is described in more detail using examples below. The technical scope of the invention is not limited to the examples shown below.

First, as referential examples, Si alloy which is expressed by chemical formula (1) and constitutes the negative electrode for an electric device according to the present invention is subjected to performance evaluation.

(Reference example A) Performance Evaluation of $Si_xTi_yGe_zA_a$ - not falling under the scope of the present invention

[1] Preparation of Negative electrode

Thin films made of the negative electrode active material alloys having different compositions are formed on substrates (current collectors) composed of 20 μm-thick nickel foil under the following conditions by using an independently controllable ternary DC magnetron sputtering apparatus (manufactured by Yamato-Kiki Industrial Co., Ltd.; combinatorial sputter coating apparatus; gun-sample distance: approximately 100 mm) as a sputtering apparatus. 31 types of negative electrode samples are thus obtained in total (reference examples 1 to 18 and comparative reference examples 1 to 13).

(1) Target (manufactured by Kojundo Chemical Lab. Co., Ltd., purity: 4N)

Si: 50.8 mm diameter, 3 mm thick (with a 2 mm-thick oxygen-free copper backing plate)

Ti: 50.8 mm diameter, 5 mm thick

Ge: 50.8 mm diameter, 3 mm thick (with a 2 mm-thick oxygen-free copper backing plate)

(2) Film Formation Condition

Base pressure: to $7 \times 10^{-6}$ Pa

Sputtering gas species: Ar (99.9999% or more)

Flow rate of introduced sputtering gas: 10 sccm

Sputtering pressure: 30 mTorr

DC power supply: Si (185 W), Ti (0 to 150 W), Ge (0 to 120 W)

Pre-sputtering time: 1 min.

Sputtering time: 10 min.

Substrate Temperature: Room Temperature (25°C)

To be specific, amorphous-phase alloy thin films are formed on Ni substrates with the sputtering time fixed to 10 minutes and the power of the DC power supply varied in the aforementioned ranges using the Si, Ge, and Ti targets described above, thus obtaining negative electrode samples provided with alloy thin films having various compositions.

Some examples in sample preparation are shown below. In reference example 14, DC power supply 1 (Si target) is set to 185 W; DC power supply 2 (Ge target) is set to 100 W; and DC power supply 3 (Ti target) is set to 130 W. In comparative reference example 2, DC power supply 1 (Si target) is set to 185 W; DC power supply 2 (Ge target) is set to 100 W; and DC power supply 3 (Ti target) is set to 0 W. In comparative reference example 9, DC power supply 1 (Si target) is set to 185 W; DC power supply 2 (Ge target) is set to 0 W; and DC power supply 3 (Ti target) is set to 40 W.

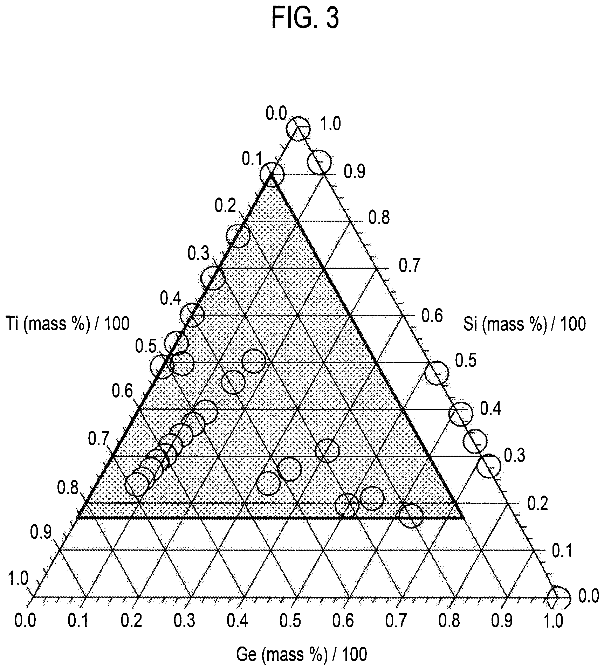

The component compositions of the aforementioned alloy thin films are shown in Table 1 and Figs. 3 to 7. The obtained alloy thin films are analyzed by the following analysis process and apparatus.

(3) Analysis Method

Composition Analysis: SEM·EDX analysis (manufactured by JEOL Ltd.), EPMA analysis (manufactured by JEOL Ltd.)

Film thickness measurement (for calculating sputtering rate): film thickness meter (manufactured by Tokyo Instruments, Inc.)

Film state analysis: Raman spectrometry (manufactured by Bruker Corporation)

[2] Preparation of Battery

Each of the negative electrode samples obtained by the aforementioned method is placed facing a counter electrode composed of lithium foil (manufactured by Honjo Metal Co., Ltd.; diameter: 15 mm; thickness: 200 µm) with a separator (Celgard 2400 manufactured by Celgard, LLC.) interposed therebetween, and then electrolytic solution is injected to produce a CR2032 coin cell.

The aforementioned electrolytic solution is obtained by dissolving $LiPF_6$ (lithium hexafluorophosphate) in a non-aqueous solvent mixture to a concentration of 1 M. The non-aqueous solvent mixture is composed of ethylene carbonate (EC) and diethyl carbonate (DEC) which are mixed at a volume ratio of 1 to 1.

[3] Battery charge-discharge test

Each battery obtained by the aforementioned method is subjected to the following charge-discharge test.

In a thermostat bath (PFU-3K by ESPEC Corp.) set to a temperature of 300 K (27°C), each prepared coin cell is charged from 2 V to 10 mV with a current of 0.1 mA in constant-current and constant-voltage mode in the charge process (a process of inserting Li into negative electrodes as the evaluation target) by using a charge-discharge tester (HJ0501SM8A by HOKUTO DENKO Corp.). Thereafter, at the discharge process (the process of releasing Li from the negative electrodes), the coin cell is discharged from 10 mV to 2V in constant-current mode with a current of 0.1 mA. The aforementioned charge and discharge, which are considered as one cycle, are repeated 100 times.

The discharge capacities at the 50th and 100th cycles are calculated, and the retention rates at the 50th and 100th cycles to the discharge capacity at the first cycle are calculated. The results are shown together in Table 1. The discharge capacity is shown by a value calculated per alloy weight. The "discharge capacity (mAh/g)" is a value per weight of pure Si or alloy and represents a capacity when Li reacts with the Si-Ti-M alloys (Si-M alloy, pure Si, or Si-Ti alloy). The "initial capacity" described in the specification corresponds to the discharge capacity (mAh/g) at the initial cycle (the first cycle).

The "discharge capacity retention rate (%)" at the 50th or 100th cycle represents an index showing what capacity is retained from the initial capacity. The equation to calculate the discharge capacity retention rate (%) is as follows.

[Math. 10]

Discharge capacity retention rate (%) = [discharge capacity at 50th or 100th cycle] / [discharge capacity at first cycle] $\times$ 100

[Table 1-1]

| | | COMPOSITION | | | First cycle | 50th cycle | 100th cycle |
|---|---|---|---|---|---|---|---|
| | | Si (mass%) | Ti (mass%) | Ge (mass%) | Discharge capacity (mAh/g) | Discharge capacity retention rate (%) | Discharge capacity retention rate (%) |
| | Reference Example 1 | 50 | 47 | 3 | 1700 | 88 | 50 |
| | Reference Example 2 | 31 | 29 | 40 | 1228 | 87 | 40 |
| | Reference Example 3 | 21 | 25 | 54 | 932 | 83 | 40 |
| | Reference Example 4 | 19 | 31 | 50 | 858 | 93 | 42 |
| | Reference Example 5 | 17 | 20 | 63 | 749 | 90 | 44 |
| | Reference Example 6 | 27 | 38 | 35 | 1197 | 84 | 45 |

(continued)

|  | COMPOSITION | | | First cycle | 50th cycle | 100th cycle |
|---|---|---|---|---|---|---|
|  | Si (mass%) | Ti (mass%) | Ge (mass%) | Discharge capacity (mAh/g) | Discharge capacity retention rate (%) | Discharge capacity retention rate (%) |
| Reference Example 7 | 24 | 44 | 32 | 1086 | 96 | 50 |
| Reference Example 8 | 50 | 34 | 16 | 2143 | 84 | 42 |
| Reference Example 9 | 46 | 39 | 15 | 2016 | 88 | 47 |
| Reference Example 10 | 39 | 48 | 13 | 1726 | 83 | 48 |
| Reference Example 11 | 37 | 51 | 12 | 1507 | 93 | 54 |
| Reference Example 12 | 34 | 55 | 11 | 1426 | 91 | 51 |
| Reference Example 13 | 33 | 57 | 10 | 1314 | 93 | 53 |
| Reference Example 14 | 30 | 60 | 10 | 1248 | 94 | 53 |
| Reference Example 15 | 29 | 62 | 9 | 1149 | 93 | 55 |
| Reference Example 16 | 27 | 64 | 9 | 1068 | 94 | 53 |
| Reference Example 17 | 25 | 67 | 8 | 982 | 95 | 50 |
| Reference Example 18 | 24 | 68 | 8 | 876 | 93 | 53 |

In Table 1-1, Reference Examples 1 to 18 do not fall under the scope of the present invention.

[Table 1-2]

|  | COMPOSITION | | | First cycle | 50th cycle | 100th cycle |
|---|---|---|---|---|---|---|
|  | Si (mass%) | Ti (mass%) | Ge (mass%) | Discharge capacity (mAh/g) | Discharge capacity retention rate (%) | Discharge capacity retention rate (%) |
| Comparative Reference Example 1 | 100 | 0 | 0 | 3232 | 47 | 16 |

(continued)

| | | COMPOSITION | | First cycle | 50th cycle | 100th cycle |
|---|---|---|---|---|---|---|
| | Si (mass%) | Ti (mass%) | Ge (mass%) | Discharge capacity (mAh/g) | Discharge capacity retention rate (%) | Discharge capacity retention rate (%) |
| Comparative Reference Example 2 | 93 | 0 | 7 | 3827 | 60 | 38 |
| Comparative Reference Example 3 | 48 | 0 | 52 | 2062 | 41 | 26 |
| Comparative Reference Example 4 | 39 | 0 | 61 | 1732 | 34 | 22 |
| Comparative Reference Example 5 | 33 | 0 | 67 | 1460 | 26 | 16 |
| Comparative Reference Example 6 | 28 | 0 | 72 | 1277 | 30 | 18 |
| Comparative Reference Example 7 | 0 | 0 | 100 | 1348 | 80 | 37 |
| Comparative Reference Example 8 | 90 | 10 | 0 | 3218 | 82 | 36 |
| Comparative Reference Example 9 | 77 | 23 | 0 | 2685 | 82 | 39 |
| Comparative Reference Example 10 | 68 | 32 | 0 | 2398 | 82 | 39 |
| Comparative Reference Example 11 | 60 | 40 | 0 | 2041 | 83 | 37 |
| Comparative Reference Example 12 | 54 | 46 | 0 | 1784 | 83 | 32 |
| Comparative Reference Example 13 | 49 | 51 | 0 | 1703 | 75 | 24 |

Table 1 reveals that the batteries of the referential examples including negative electrode active materials having alloys composed of 17% or more and less than 90% Si, more than 10% and less than 83% Ti, and more than 0% and less than 73% Ge have initial capacities of not less than 749 mAh/g. It is also revealed that the batteries of these referential examples exhibit high discharge capacity retention rates of not less than 83% at the 50th cycle and not less than 40% even at 100th cycle. Moreover, from the viewpoint of more excellent capacity and cycle durability, it is revealed that the negative electrode active material is preferably composed of an alloy including 17% or more and less than 90% Si, more than 10% and less than 83% Ti, and more than 0% and less than 73% Ge. On the other hand, compared with the batteries of the examples, it is revealed that some of the batteries of the comparative referential examples have high discharge capacities at the first cycle but the discharge capacity retention rates thereof are significantly lowered. It is therefore confirmed that the batteries including the negative electrode active materials of the referential examples are excellent in capacity and cycle durability.

(Reference example B): Performance Evaluation of $Si_xTi_ySn_zA_a$

[1] Preparation of Negative electrode

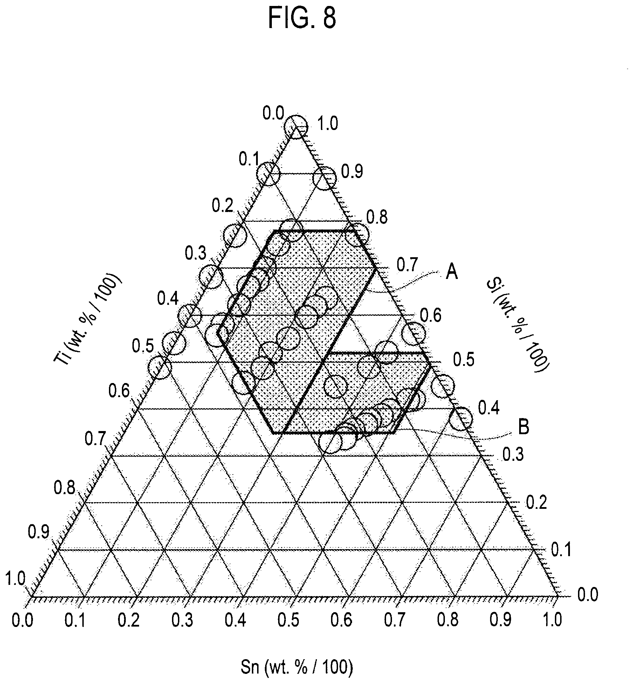

40 types of negative electrode samples are prepared in total (reference examples 19 to 44 and comparative reference examples 14 to 27) by the same method as that of reference example 1 except that the "Ge: 50.8 mm diameter, 3 mm thick (with a 2 mm-thick oxygen-free backing plate)" of the target in (1) of reference example 1 is replaced with "Sn: 50.8 mm diameter, 5 mm thick"; and "Ge (0 to 120 W)" in (2) of the DC power supply is replaced with "Sn (0 to 40 W)".
Some examples of the aforementioned (2) in sample preparation are shown below. In reference example 35, DC power supply 1 (Si target) is set to 185 W; DC power supply 2 (Sn target) is set to 30 W; and DC power supply 3 (Ti target) is set to 150 W. In comparative reference example 15, DC power supply 1 (Si target) is set to 185 W; DC power supply 2 (Sn target) is set to 22 W; and DC power supply 3 (Ti target) is set to 0 W. In comparative reference example 20, DC power supply 1 (Si target) is set to 185 W; DC power supply 2 (Sn target) is set to 0 W; and DC power supply 3 (Ti target) is set to 30 W.
The component compositions of the aforementioned alloy thin films are shown in Table 2 and Fig. 8.

[2] Preparation of Battery

CR2032 coin cells are prepared by the same method as that of reference example 1.

[3] Battery Charge-discharge Test

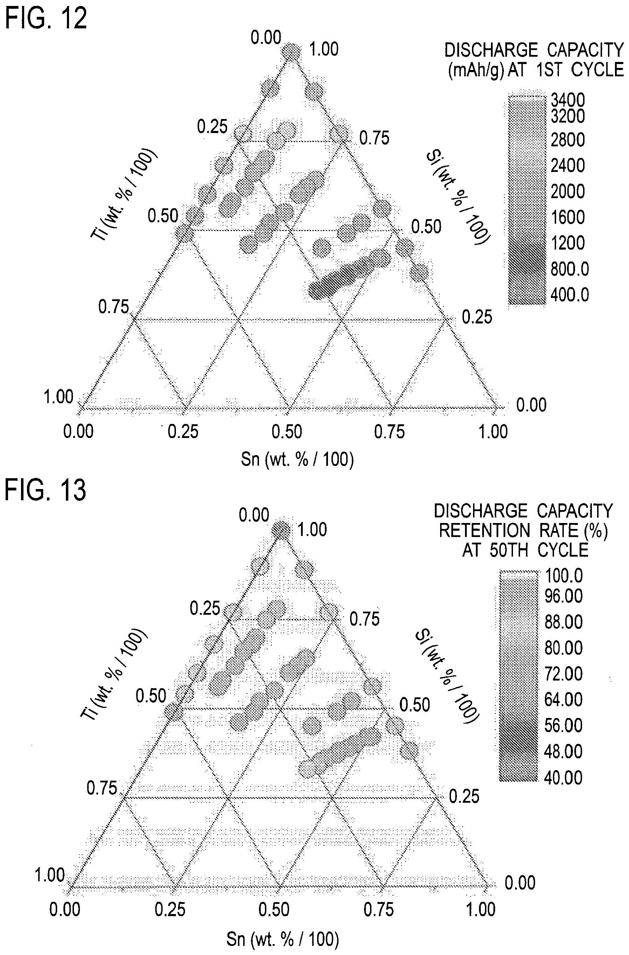

The battery charge-discharge test is performed in the same manner as that of the reference example 1. The results are shown in Table 2 together. Fig. 12 shows the relationship between the discharge capacity at the first cycle and alloy composition. Moreover, Figs. 13 and 14 show the relationships between the discharge capacity retention rate and alloy composition at the 50th cycle and 100th cycle, respectively. The discharge capacity is shown by values calculated per alloy weight.

[Table 2-1]

| | | COMPOSITION | | | First cycle | 50th cycle | 100th cycle |
|---|---|---|---|---|---|---|---|
| | | Si (mass%) | Ti (mass%) | Sn (mass%) | Discharge capacity (mAh/g) | Discharge capacity retention rate (%) | Discharge capacity retention rate (%) |
| | Reference Example 19 | 52 | 7 | 41 | 1764 | 94 | 51 |
| | Reference Example 20 | 49 | 12 | 39 | 1635 | 95 | 53 |
| | Reference Example 21 | 45 | 20 | 35 | 1375 | 94 | 53 |
| | Reference Example 22 | 42 | 7 | 51 | 1319 | 98 | 52 |
| | Reference Example 23 | 42 | 8 | 50 | 1307 | 94 | 52 |
| | Reference Example 24 | 40 | 12 | 48 | 1217 | 94 | 51 |

(continued)

| | | COMPOSITION | | First cycle | 50th cycle | 100th cycle |
|---|---|---|---|---|---|---|
| | Si (mass%) | Ti (mass%) | Sn (mass%) | Discharge capacity (mAh/g) | Discharge capacity retention rate (%) | Discharge capacity retention rate (%) |
| Reference Example 25 | 39 | 14 | 47 | 1175 | 94 | 51 |
| Reference Example 26 | 38 | 17 | 45 | 1108 | 94 | 49 |
| Reference Example 27 | 37 | 18 | 45 | 1089 | 94 | 48 |
| Reference Example 28 | 36 | 21 | 43 | 1050 | 93 | 47 |
| Reference Example 29 | 35 | 23 | 42 | 1008 | 93 | 47 |
| Reference Example 30 | 64 | 12 | 24 | 2277 | 93 | 46 |
| Reference Example 31 | 62 | 15 | 23 | 2173 | 94 | 47 |
| Reference Example 32 | 60 | 18 | 22 | 1978 | 94 | 50 |
| Reference Example 33 | 55 | 24 | 21 | 1818 | 97 | 55 |
| Reference Example 34 | 52 | 29 | 19 | 1661 | 98 | 58 |
| Reference Example 35 | 49 | 32 | 19 | 1538 | 98 | 59 |
| Reference Example 36 | 46 | 37 | 17 | 1371 | 96 | 58 |
| Reference Example 37 | 78 | 12 | 10 | 2669 | 91 | 43 |
| Reference Example 38 | 75 | 16 | 9 | 2531 | 91 | 43 |

(continued)

| | COMPOSITION | | | First cycle | 50th cycle | 100th cycle |
|---|---|---|---|---|---|---|
| | Si (mass%) | Ti (mass%) | Sn (mass%) | Discharge capacity (mAh/g) | Discharge capacity retention rate (%) | Discharge capacity retention rate (%) |
| Reference Example 39 | 70 | 21 | 9 | 2294 | 94 | 49 |
| Reference Example 40 | 68 | 23 | 9 | 2194 | 94 | 50 |
| Reference Example 41 | 66 | 26 | 8 | 2073 | 95 | 51 |
| Reference Example 42 | 62 | 30 | 8 | 1878 | 95 | 53 |
| Reference Example 43 | 58 | 35 | 7 | 1775 | 95 | 56 |
| Reference Example 44 | 56 | 37 | 7 | 1632 | 96 | 55 |

In Table 2-1, Reference Examples 19 to 32 and 37 to 42 do not fall under the scope of the present invention.

[Table 2-2]

| | COMPOSITION | | | First cycle | 50th cycle | 100th cycle |
|---|---|---|---|---|---|---|
| | Si (mass%) | Ti (mass%) | Sn (mass%) | Discharge capacity (mAh/g) | Discharge capacity retention rate (%) | Discharge capacity retention rate (%) |
| Comparative Reference Example 14 | 100 | 0 | 0 | 3232 | 47 | 22 |
| Comparative Reference Example 15 | 89 | 0 | 11 | 3149 | 78 | 36 |
| Comparative Reference Example 16 | 77 | 0 | 23 | 2622 | 84 | 38 |
| Comparative Reference Example 17 | 56 | 0 | 44 | 1817 | 91 | 42 |
| Comparative Reference Example 18 | 45 | 0 | 55 | 1492 | 91 | 42 |
| Comparative Reference Example 19 | 38 | 0 | 62 | 1325 | 91 | 42 |

(continued)

| | COMPOSITION | | | First cycle | 50th cycle | 100th cycle |
|---|---|---|---|---|---|---|
| | Si (mass%) | Ti (mass%) | Sn (mass%) | Discharge capacity (mAh/g) | Discharge capacity retention rate (%) | Discharge capacity retention rate (%) |
| Comparative Reference Example 20 | 90 | 10 | 0 | 3218 | 82 | 36 |
| Comparative Reference Example 21 | 77 | 23 | 0 | 2685 | 82 | 39 |
| Comparative Reference Example 22 | 68 | 32 | 0 | 2398 | 82 | 39 |
| Comparative Reference Example 23 | 60 | 40 | 0 | 2041 | 83 | 37 |
| Comparative Reference Example 24 | 54 | 46 | 0 | 1784 | 83 | 32 |
| Comparative Reference Example 25 | 49 | 51 | 0 | 1703 | 75 | 24 |
| Comparative Reference Example 26 | 34 | 24 | 42 | 977 | 90 | 38 |
| Comparative Reference Example 27 | 33 | 27 | 40 | 870 | 82 | 23 |

The above-described results confirm that the batteries of the referential examples have at least initial capacities of more than 1000 mAh/g and exhibit discharge capacity retention rates of not less than 91% after 50 cycles and not less than 43% even after 100 cycles.

(Reference example C): Performance Evaluation of $Si_xTi_yZn_zA_a$ - not falling under the scope of the present invention

Preparation of Negative electrode

[1] 40 types of negative electrode samples are prepared in total (reference examples 45 to 56 and comparative reference examples 28 to 40) by the same method as that of reference example 1 except that the conditions for the DC power source of (1) and (2) in reference example 1 are changed as follows.

(1) Target (Kojundo Chemical Lab. Co., Ltd.)

Si (purity: 4N): 2 inch diameter, 3 mm thick (with a 2 mm-thick oxygen-free copper backing plate)

Ti (purity: 5N): 2 inch diameter, 5 mm thick

Zn (purity: 4N): 2 inch diameter, 5 mm thick

(2) Film Formation Condition (DC power supply)

DC power supply: Si (185 W), Ti (50 to 200 W), Zn (30 to 90 W)

Herein, one of the prepared samples is shown below as an example. In reference example 49, DC power supply 2 (Si target) is set to 185 W; DC power supply 1 (Ti target) is set to 150 W; and DC power supply 3 (Zn target) is set to 60 W.

[2] Preparation of Battery

CR2032 coin cells are prepared by the same method as that of reference example 1.

[3] Battery Charge-discharge Test

The battery charge-discharge test is performed in the same manner as that of reference example 1 except that the discharge capacity retention rate at the 50th cycle is calculated by the following mathematical formula. The results are shown together in Table 3.

[Math. 11]

$$\text{Discharge capacity retention rate (\%)} = [\text{Discharge capacity at 50th cycle}] / [\text{Maximum discharge capacity}] \times 100$$

The discharge capacity reaches the maximum between the initial cycle and 10 cycle and normally between the fifth and tenth cycle.

[Table 3-1]

| | COMPOSITION | | | First cycle | 50th cycle | |
|---|---|---|---|---|---|---|
| | Si (mass%) | Ti (mass%) | Zn (mass%) | Discharge capacity (mAh/g) | Discharge capacity (mAh/g) | Discharge capacity retention rate (%) |
| Reference Example 45 | 72 | 11 | 18 | 1800 | 1564 | 87 |
| Reference Example 46 | 61 | 9 | 30 | 1693 | 1491 | 88 |
| Reference Example 47 | 53 | 8 | 39 | 1428 | 1257 | 88 |
| Reference Example 48 | 61 | 24 | 15 | 1372 | 1284 | 94 |
| Reference Example 49 | 53 | 21 | 26 | 1216 | 1177 | 97 |
| Reference Example 50 | 47 | 19 | 35 | 1129 | 1084 | 96 |
| Reference Example 51 | 53 | 34 | 13 | 1095 | 1025 | 94 |

(continued)

| | COMPOSITION | | | First cycle | 50th cycle | |
| | Si (mass%) | Ti (mass%) | Zn (mass%) | Discharge capacity (mAh/g) | Discharge capacity (mAh/g) | Discharge capacity retention rate (%) |
|---|---|---|---|---|---|---|
| Reference Example 52 | 47 | 30 | 23 | 963 | 907 | 94 |
| Reference Example 53 | 42 | 27 | 31 | 934 | 843 | 90 |
| Reference Example 54 | 47 | 42 | 12 | 987 | 919 | 93 |
| Reference Example 55 | 42 | 37 | 21 | 782 | 711 | 91 |
| Reference Example 56 | 38 | 34 | 28 | 690 | 635 | 92 |

In Table 3-1, Reference Examples 45 to 56 do not fall under the scope of the present invention.

[Table 3-2]

| | COMPOSITION | | | First cycle | 50th cycle | |
| | Si (mass%) | Ti (mass%) | Zn (mass%) | Discharge capacity (mAh/g) | Discharge capacity (mAh/g) | Discharge capacity retention rate (%) |
|---|---|---|---|---|---|---|
| Comparative Reference Example 28 | 87 | 0 | 13 | 2437 | 2068 | 85 |
| Comparative Reference Example 29 | 80 | 0 | 20 | 2243 | 1871 | 83 |
| Comparative Reference Example 30 | 74 | 0 | 26 | 2078 | 1464 | 70 |
| Comparative Reference Example 31 | 69 | 0 | 31 | 1935 | 1404 | 73 |
| Comparative Reference Example 32 | 65 | 0 | 35 | 1811 | 1304 | 72 |
| Comparative Reference Example 33 | 61 | 0 | 39 | 1701 | 1181 | 69 |
| Comparative Reference Example 34 | 100 | 0 | 0 | 3232 | 1529 | 47 |

(continued)

| | COMPOSITION | | | First cycle | 50th cycle | |
|---|---|---|---|---|---|---|
| | Si (mass%) | Ti (mass%) | Zn (mass%) | Discharge capacity (mAh/g) | Discharge capacity (mAh/g) | Discharge capacity retention rate (%) |
| Comparative Reference Example 35 | 90 | 10 | 0 | 3218 | 2628 | 82 |
| Comparative Reference Example 36 | 77 | 23 | 0 | 2685 | 2199 | 82 |
| Comparative Reference Example 37 | 68 | 32 | 0 | 2398 | 1963 | 82 |
| Comparative Reference Example 38 | 60 | 40 | 0 | 2041 | 1694 | 83 |
| Comparative Reference Example 39 | 54 | 46 | 0 | 1784 | 1485 | 83 |
| Comparative Reference Example 40 | 49 | 51 | 0 | 1703 | 1272 | 75 |

The results of Table 3 confirm that the batteries of reference examples 45 to 56 have extremely high initial capacities (discharge capacities at the first cycle) that is impossible for existing carbon negative electrode active material (carbon/graphite-based negative electrode materials) to implement. It is also confirmed that the batteries of reference examples 45 to 56 similarly have high capacities (initial capacities of 690 mAh/g or more) equal to or more than those of existing Sn-based alloy negative electrode active materials. Moreover, in terms of the cycle durability, which is a trade-off for high capacity, the batteries of reference examples 45 to 56 similarly have extremely excellent cycle durability compared with Sn-based negative electrode active materials , which have high capacity but poor cycle durability, and the multi-component alloy negative electrode active materials according to Patent Literature 1.

To be specific, it is confirmed that the batteries of reference examples 45 to 56 exhibit extremely excellent cycle durability and have high discharge capacity retention rates of 87% or more, preferably 90% or more, and more preferably 96% or more at the 50th cycle. The batteries of reference examples 45 to 56 have high discharge capacity retention rates at the 50th cycle compared with the batteries of comparative reference examples 28 to 40. It is revealed that reduction of high initial capacity is reduced and the high capacity can be therefore maintained more efficiently.

[4] Initial Cycle of Battery

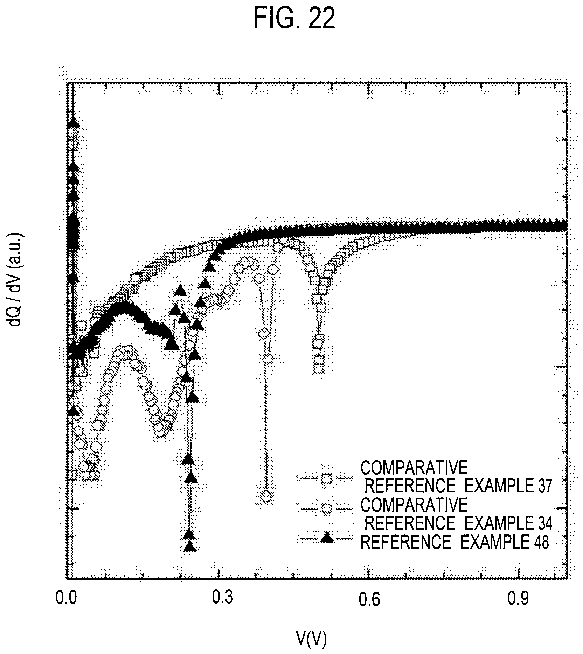

The test cells (CR2032 coin cells) employing the test electrodes of reference example 48 and comparative reference examples 34 and 37 are subjected to the initial cycle under the same charge-discharge conditions as those of [3]. Fig. 22 shows dQ/dV curves to voltage (V) at the discharge process of the initial cycle.

In Fig. 22, as interpretation of dQ/dV, the curves are smooth with the number of troughs reduced in the low-potential region (not more than 0.4 V). This can confirm that adding the elements (Ti, Zn) besides Si prevents crystallization of Li-Si alloy. Herein, Q indicates battery capacity (discharge capacity).

To be specific, the steep trough near 0.4 V in the curve for comparative reference example 34 (metal thin film of pure Si) shows a change due to decomposition of the electrolytic solution. The small troughs near 0.35, 0.2, and 0.05 V show changes from the amorphous to crystalline phases.

On the other hand, in the curves of reference example 48 (thin film of Si-Ti-Zn ternary alloy) including elements (Ti, Zn) in addition to Si and comparative reference example 37 (thin film of Si-Ti binary alloy), there are steep troughs, which show changes due to decomposition of the electrolytic solution, near 2.5 V and 5.0 V, respectively. However, there are no other small troughs that show changes from the amorphous to crystalline phases. It is therefore confirmed that the crystallization of Li-Si alloy can be prevented. Moreover, from the aforementioned sample 20, in particular, it is confirmed that the crystallization of Li-Si alloy can be prevented even when only Ti (other than Si) is included as the additive elements. However, it is confirmed based on Table 3 shown above that the binary alloy thin film of Si-Ti of comparative reference example 37 cannot prevent reduction (degradation) of the discharge capacity retention rate (%) after 50 cycles.

From the aforementioned experimental results, the mechanism (the mechanism of action) how the ternary alloys of the embodiment exhibit good balanced characteristics of providing high discharge capacity at the first cycle and maintaining high cycle characteristics, especially a high discharge capacity retention rate at the 50th cycle can be estimated (assumed) in the following manner.

1. As shown in [4], the dQ/dV curve of the ternary alloy includes less troughs and is smoother in the low-potential region (under 0.6 V) than that of pure-Si (which is not alloy). This is thought to mean that the ternary alloy prevents decomposition of the electrolytic solution and inhibit the phase transition of Li-Si alloy to the crystalline phase (see Fig. 22).

2. As for the decomposition of the electrolytic solution, as the number of cycles increases, the discharge capacities of all of reference examples 45 to 56 are reduced because of the decomposition (see Table 3). However, the comparison in terms of the discharge capacity retention rate reveals that the ternary alloys implement extremely high discharge capacity retention rates compared with pure-Si (which is not alloy) of Comparative Example 34. Moreover, the ternary alloys also implement high discharge capacity retention rates compared with existing high-capacity Sn-based negative electrode active materials, the multi-component alloy negative electrode active materials according to Patent Literature 1, and the referential binary alloy negative electrode active materials. This reveals that the cycle characteristics tend to be increased by implementing the condition of high discharge capacity retention rate (see the discharge capacity retention rate at the 50th cycle in Table 3).

3. In regard to the phase transition of Li-Si alloy to the crystalline phase, when the phase transition occurs, the active material significantly changes in volume. This causes a chain of destruction of the active material and destruction of electrodes. As shown by the dQ/dV curves of Fig. 22 of [4], the curve for the sample 4 is smooth with a very few troughs by the phase transition. It is therefore determined that the phase transition can be inhibited.

As described above, the results of the referential examples reveal that selecting the first additive element Ti and second additive element M is extremely useful and effective. By the selection of the first and second additive elements, the amorphous to crystalline phase transition in the alloying process is inhibited, thus providing a Si alloy negative electrode active material having high capacity and high cycle durability. As a result, it is possible to provide a lithium ion secondary battery having high capacity and high cycle durability.

In reference example 3, for example, the referential batteries of comparative reference examples 28 to 40 have high capacity but exhibit discharge capacity retention rates of 47 to 85%. The referential batteries are therefore found to have insufficient cycle durability, which is a trade-off for high capacity. This reveals that in the referential batteries, reduction (degradation) of the cycle durability cannot be sufficiently inhibited. It is therefore confirmed that Si metal and binary alloys cannot implement batteries that can exhibit high capacity and cycle durability, which are in a trade-off, in a balanced manner.

Next, as examples, performance evaluation is performed for the negative electrodes for an electric device including the negative electrode active material composed of a mixture of graphite and $Si_{42}Ti_7Sn_{51}$ among the afore-mentioned Si alloys (corresponding to reference example 22).

The alloys other than $Si_{42}Ti_7Sn_{51}$ ($Si_xTi_yGe_zA_a$, $Si_xTi_yZn_zA_a$, and $Si_xTi_ySn_zA_a$ except $Si_{42}Ti_7Sn_{51}$) show the same or similar results to the examples described below employing $Si_{42}Ti_7Sn_{51}$. The reason therefor is that the other alloys have similar properties to those of $Si_{42}Ti_7Sn_{51}$ as shown by the referential examples. In the case of using alloys having similar characteristics, the same results can be obtained even if the alloy type is different.

(Example 1) - not falling under the scope of the present invention

[Preparation of Si alloy]

The Si alloy is produced by mechanical alloying (or arc plasma melting). To be specific, in a planetary ball mill P-6 (by FRITCSH in German), powder of the raw materials of each alloy is put into a zirconia pulverizing pot together with zirconia pulverization balls to be alloyed at 600 rpm for 48 h.

[Preparation of Negative electrode]

2.76 parts by mass of the Si alloy ($Si_{42}Ti_7Sn_{51}$, particle diameter: 0.3 $\mu$m) prepared above and 89.24 parts by mass of graphite (average particle diameter: 22 $\mu$m) as the negative electrode active material, 4 parts by mass of acetylene black as the electrically-conductive auxiliary agent, and 4 parts by mass of polyimide as the binder are mixed and dispersed in N-methylpyrrolidone to form negative electrode slurry. Subsequently, the obtained negative electrode slurry is evenly applied on both sides of a negative electrode current collector made of 10 $\mu$m-thick copper foil so that the negative electrode active material layers have a thickness of 30 $\mu$m. The thus-obtained product is dried in vacuum for 24 hours, thus producing a negative electrode. The content of Si alloy in the negative electrode active material is 3%.

[Preparation of Positive electrode]

$Li_{1.85}Ni_{0.18}Co_{0.10}Mn_{0.87}O_3$ as the positive electrode active material is prepared by a method described in Example 1 (Paragraph 0046) of Japanese Unexamined Patent Application Publication No. 2012-185913. 90 parts by mass of the prepared positive electrode active material, 5 parts by mass of acetylene black as the electrically-conductive auxiliary agent, and 5 parts by mass of polyvinylidene fluoride as the binder are mixed and the dispersed in N-methylpyrrolidone to form positive electrode slurry. The obtained positive electrode slurry is then evenly applied to both sides of a positive electrode current collector made of 20 $\mu$m-thick aluminum foil so that the positive electrode active material layers have thicknesses of 30 $\mu$m, followed by drying, thus obtaining a positive electrode.

[Preparation of Battery]

The positive electrode and negative electrode prepared as described above are placed facing each other with a separator (20 $\mu$m-thick microporous film made of polypropylene) provided therebetween. The layered product of the negative electrode, separator, and positive electrode is placed in the bottom portion of a coin cell (CR2032, made of stainless steel (SUS316)). Moreover, a gasket is attached to the same to keep the positive electrode and negative electrode isolated from each other; the electrolytic solution described below is injected through a syringe; a spring and a spacer are stacked thereon; the upper portion of the coin cell is laid thereon and caulked to be sealed, thus obtaining a lithium ion secondary battery.

The electrolytic solution is a solution obtained by dissolving lithium hexafluorophosphate ($LiPF_6$) as the supporting salt in an organic solvent to a concentration of 1 mol/L. The organic solvent is a mixture of ethylene carbonate (EC) and diethylene carbonate (DEC) in a volume ratio of 1/2 (EC /DEC).

(Example 2) - not falling under the scope of the present invention

A negative electrode and a battery are prepared by the same method as that of Example 1 except that the amount of Si alloy is changed to 4.6 parts by mass and the amount of graphite is changed to 87.4 parts by mass. The content rate of the Si alloy in the negative electrode active material is 5%.

(Example 3) - not falling under the scope of the present invention

A negative electrode and a battery are prepared by the same method as that of Example 1 except that the amount of Si alloy is changed to 6.44 parts by mass and the amount of graphite is changed to 85.56 parts by mass. The content rate of the Si alloy in the negative electrode active material is 7%.

(Example 4) - not falling under the scope of the present invention

The negative electrode and battery are prepared by the same method as that of Example 1 except that the amount of Si alloy is changed to 9.2 parts by mass and the amount of graphite is changed to 82.8 parts by mass. The content rate of the Si alloy in the negative electrode active material is 10%.

(Example 5) - not falling under the scope of the present invention

The negative electrode and battery are prepared by the same method as that of Example 1 except that the amount of Si alloy is changed to 11.04 parts by mass and the amount of graphite is changed to 80.96 parts by mass. The content rate of the Si alloy in the negative electrode active material is 12%.

(Example 6) - not falling under the scope of the present invention

The negative electrode and battery are prepared by the same method as that of Example 1 except that the amount of Si alloy is changed to 13.8 parts by mass and the amount of graphite is changed to 78.2 parts by mass. The content rate of the Si alloy in the negative electrode active material is 15%.

(Example 7) - not falling under the scope of the present invention

The negative electrode and battery are prepared by the same method as that of Example 1 except that the amount of Si alloy is changed to 18.4 parts by mass and the amount of graphite is changed to 73.6 parts by mass. The content rate of the Si alloy in the negative electrode active material is 20%.

(Example 8) - not falling under the scope of the present invention

The negative electrode and battery are prepared by the same method as that of Example 1 except that the amount of Si alloy is changed to 23.0 parts by mass and the amount of graphite is changed to 69.0 parts by mass. The content rate of the Si alloy in the negative electrode active material is 25%.

(Example 9) - not falling under the scope of the present invention

The negative electrode and battery are prepared by the same method as that of Example 1 except that the amount of Si alloy is changed to 27.6 parts by mass and the amount of graphite is changed to 64.4 parts by mass. The content rate of the Si alloy in the negative electrode active material is 30%.

(Example 10) - not falling under the scope of the present invention

The negative electrode and battery are prepared by the same method as that of Example 1 except that the amount of Si alloy is changed to 36.8 parts by mass and the amount of graphite is changed to 55.2 parts by mass. The content rate of the Si alloy in the negative electrode active material is 40%.

(Example 11) - not falling under the scope of the present invention

The negative electrode and battery are prepared by the same method as that of Example 1 except that the amount of Si alloy is changed to 46.0 parts by mass and the amount of graphite is changed to 46.0 parts by mass. The content rate of the Si alloy in the negative electrode active material is 50%.

(Example 12) - not falling under the scope of the present invention

The negative electrode and battery are prepared by the same method as that of Example 1 except that the amount of Si alloy is changed to 55.2 parts by mass and the amount of graphite is changed to 36.8 parts by mass. The content rate of the Si alloy in the negative electrode active material is 60%.

(Example 13) - not falling under the scope of the present invention

The negative electrode and battery are prepared by the same method as that of Example 1 except that the amount of Si alloy is changed to 64.4 parts by mass and the amount of graphite is changed to 27.6 parts by mass. The content rate of the Si alloy in the negative electrode active material is 70%.

<Performance Evaluation>

[Evaluation of Cycle Characteristic]

The lithium ion secondary batteries prepared above are subjected to cycle characteristic evaluation in the following manner. Each battery is charged to 2.0 V in the atmosphere of 30°C in constant-current mode (CC, current: 0.1 C) and is rested for 10 minutes. Subsequently, the battery is discharged to 0.01 V in constant-current mode (CC, current: 0.1 C) and is then rested for 10 minutes. Herein, the above charge and discharge are considered as one cycle. Each lithium ion secondary battery is subjected to the charge-discharge test for 100 cycles, and the ratio of discharge capacity at the 100th cycle to the discharge capacity at the first cycle (discharge capacity retention rate (%)) is calculated.

The obtained results are shown in Table 4 and Fig. 23 below.

[Evaluation of Energy Density]

The lithium ion secondary batteries prepared above are subjected to cycle characteristic evaluation in the following manner. As the initial charge and discharge process, each battery is charged with a current of 0.2 C to the theoretical capacity of the positive electrode in constant-current mode and then is charged at a constant voltage of 4.2 V for 10 hours in total. Subsequently, the battery is discharged to 2.7 V in constant-current mode with a discharge current of 0.2 C. The battery energy is calculated from the charge-discharge curve in this process and is divided by the battery weight, thus calculating the energy density of the battery. The obtained results are shown in Table 4 and Fig. 23 below.

[Table 4]

|  | Content rate of Si alloy (%) | Discharge capacity retention rate (%) | Energy density (mAh/g) |
| --- | --- | --- | --- |
| Example 1 | 3 | 98 | 397 |
| Example 2 | 5 | 98 | 420 |
| Example 3 | 7 | 97 | 443 |
| Example 4 | 10 | 97 | 477 |
| Example 5 | 12 | 96 | 499 |
| Example 6 | 15 | 95 | 534 |
| Example 7 | 20 | 93 | 590 |
| Example 8 | 25 | 91 | 647 |
| Example 9 | 30 | 89 | 704 |
| Example 10 | 40 | 85 | 818 |
| Example 11 | 50 | 80 | 932 |
| Example 12 | 60 | 70 | 1045 |
| Example 13 | 70 | 45 | 1159 |

In Table 4 Examples 1 to 13 do not fall under the scope of the present invention.
From the results in Table 4 above and Fig. 23, it is understood that the batteries employing the negative electrode active materials composed of the mixtures of graphite and the Si alloys of Examples 1 to 13 exhibit good-balanced characteristics of having high initial capacity and retaining high cycle characteristics.

REFERENCE SIGNS LIST

10, 50     LITHIUM ION SECONDARY BATTERY (LAMINATED BATTERY)
11     POSITIVE ELECTRODE CURRENT COLLECTOR
12     NEGATIVE ELECTRODE CURRENT COLLECTOR
13     POSITIVE ELECTRODE ACTIVE MATERIAL LAYER
15     NEGATIVE ELECTRODE ACTIVE MATERIAL LAYER
17     ELECTROLYTE LAYER
19     SINGLE CELL LAYER
21, 57     POWER GENERATION ELEMENT
25, 58     POSITIVE ELECTRODE CURRENT COLLECTING PLATE
27, 59     NEGATIVE ELECTRODE CURRENT COLLECTING PLATE
29, 52     BATTERY EXTERIOR MEMBER (LAMINATED FILM)

**Claims**

1. A negative electrode for a lithium ion secondary battery, comprising: a current collector (12); and an electrode layer (15) containing a negative electrode active material, an electrically-conductive auxiliary agent and a binder and formed on a surface of the current collector (12),
   wherein the negative electrode active material is a mixture of a carbon material and an alloy expressed by the following formula (1):

$$Si_xTi_yM_zA_a \dots \qquad (1)$$

in formula (1), the M is Sn,
A is inevitable impurity, and
x, y, z, and a represent mass percent values, and the x, y, and z satisfy the following mathematical formula:

$$46 \leq x \leq 58, 24 < y \leq 37, 7 \leq z \leq 21$$

$$0 \leq a < 0.5, \text{ and } x + y + z + a = 100,$$

and
wherein the alloy has an average particle diameter smaller than that of the carbon material.

2. The negative electrode for a lithium ion secondary battery according to claim 1, wherein a content rate of the alloy in the negative electrode active material is 3 to 70 mass%.

3. The negative electrode for a lithium ion secondary battery according to claim 2, wherein the content rate of the alloy in the negative electrode active material is 30 to 50 mass%.

4. The negative electrode for a lithium ion secondary battery according to claim 2, wherein the content rate of the alloy in the negative electrode active material is 50 to 70 mass%.

5. A lithium ion secondary battery comprising a negative electrode for a lithium ion secondary battery according to any one of claims 1 to 4.

**Patentansprüche**

1. Negative Elektrode für eine Lithiumionen-Sekundärbatterie umfassend:

   einen Stromabnehmer (12); und eine Elektrodenschicht (15), enthaltend ein Negativelektrodenaktivmaterial, ein elektrisch leitfähiges Hilfsmittel und einen Binder, und die auf einer Oberfläche des Stromabnehmers (12) ausgebildet ist,
   wobei das Negativelektrodenaktivmaterial eine Mischung eines Kohlenstoffmaterials und einer Legierung, welche durch die folgende Formel (1) ausgedrückt wird, ist;

$$Si_xTi_yM_zA_a \dots \qquad (1)$$

wobei in Formel 1 das M Sn ist,
A eine unvermeidbare Verunreinigung ist, und
x, y, z, und a Massenprozentwerte darstellen, und x, y, und z den folgenden mathematischen Formeln genügen:

$$46 \leq x \leq 59, 24 < y \leq 37, 7 \leq z \leq 21$$

$$0 \leq a < 0{,}5 \text{ und } x + y + z + a = 100,$$

und

wobei die Legierung einen durchschnittlichen Partikeldurchmesser, welcher kleiner als der des Kohlenstoffmaterials ist, aufweist.

2. Negative Elektrode für eine Lithiumionen-Sekundärbatterie nach Anspruch 1, wobei ein Anteilswert der Legierung in dem Negativelektrodenaktivmaterial 3 bis 70 Ma.-% ist.

3. Negative Elektrode für eine Lithiumionen-Sekundärbatterie nach Anspruch 2, wobei der Anteilswert der Legierung in dem Negativelektrodenaktivmaterial 30 bis 50 Ma.-% ist.

4. Negativelektrodenaktivmaterial für eine Lithiumionen-Sekundärbatterie nach Anspruch 1, wobei der Anteilswert der Legierung in dem Negativelektrodenaktivmaterial 50 bis 70 Ma.-% ist.

5. Lithiumionen-Sekundärbatterie umfassend eine negative Elektrode für eine Lithiumionen-Sekundärbatterie nach einem der Ansprüche 1 bis 4.

**Revendications**

1. Électrode négative pour une batterie secondaire au lithium-ion, comprenant: un collecteur de courant (12); et une couche d'électrode (15) contenant un matériau actif d'électrode négative, un agent auxiliaire électroconducteur et un liant et formée sur une surface du collecteur de courant (12),
dans laquelle le matériau actif d'électrode négative est un mélange d'un matériau carboné et d'un alliage exprimé par la formule (1) suivante :

$$Si_x Ti_y M_z A_a \ldots \qquad (1)$$

dans la formule (1), M représente Sn,
A représente une impureté inévitable, et
x, y, z, et a représentent des valeurs de pourcentage massique, et les x, y et z satisfont la formule mathématique suivante :

$$46 \leq x \leq 58,\ 24 < y \leq 37,\ 7 \leq z \leq 21$$

$$0 \leq a < 0{,}5 \text{ et } x + y + z + a = 100,$$

et
où l'alliage a un diamètre moyen de particules inférieur à celui du matériau carboné.

2. Électrode négative pour une batterie secondaire au lithium-ion selon la revendication 1, dans laquelle le taux de teneur en alliage dans le matériau actif d'électrode négative est compris entre 3 et 70% en masse.

3. Électrode négative pour une batterie secondaire au lithium-ion selon la revendication 2, dans laquelle le taux de teneur en alliage dans le matériau actif d'électrode négative est compris entre 30 et 50% en masse.

4. Électrode négative pour une batterie secondaire au lithium-ion selon la revendication 2, dans laquelle le taux de teneur en alliage dans le matériau actif d'électrode négative est compris entre 50 et 70% en masse.

5. Batterie secondaire au lithium-ion comprenant une électrode négative pour une batterie secondaire au lithium-ion selon l'une quelconque des revendications 1 à 4.

FIG. 1

# FIG. 2

50

57

58

59

52

# FIG. 3

# FIG. 4

# FIG. 5

# FIG. 6

# FIG. 7

# FIG. 8

## FIG. 9

# FIG. 10

# FIG. 11

FIG. 12

DISCHARGE CAPACITY
(mAh/g) AT 1ST CYCLE

3400
3200
2800
2400
2000
1600
1200
800.0
400.0

Ti (wt. % / 100)

Si (wt. % / 100)

Sn (wt. % / 100)

FIG. 13

DISCHARGE CAPACITY
RETENTION RATE (%)
AT 50TH CYCLE

100.0
96.00
88.00
80.00
72.00
64.00
56.00
48.00
40.00

Ti (wt. % / 100)

Si (wt. % / 100)

Sn (wt. % / 100)

FIG. 14

FIG. 15

FIG. 16

FIG. 17

FIG. 18

FIG. 19

FIG. 20

FIG. 21

# FIG. 22

# FIG. 23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009517850 A
- JP 2012185913 A